# EUROPEAN PATENT APPLICATION

(11) **EP 4 811 351 A1**
(43) Date of publication of application: **23.09.2026**
(21) Application number: 24915481.6
(22) Date of filing: 13.12.2024
(51) Int. Cl.: G10L 15/18, G10L 15/183, G10L 15/22, G10L 15/16, G06N 3/08

(54) **ELECTRONIC DEVICE AND UTTERANCE PROCESSING METHOD OF ELECTRONIC DEVICE**

(30) Priority: 03.01.2024 KR 20240001205; 25.01.2024 KR 20240011875
(71) Applicant: Samsung Electronics Co., Ltd., Suwon-si, Gyeonggi-do 16677 (KR)
(72) Inventor: SONG, Taieui, Suwon-si Gyeonggi-do 16677 (KR); RYU, Jaemin, Suwon-si Gyeonggi-do 16677 (KR); PARK, Soonsang, Suwon-si Gyeonggi-do 16677 (KR); SONG, Gajin, Suwon-si Gyeonggi-do 16677 (KR); LEE, Heejae, Suwon-si Gyeonggi-do 16677 (KR); HWANG, Dongchoon, Suwon-si Gyeonggi-do 16677 (KR)
(74) Representative: Gulde & Partner
(86) International application number: PCT/KR2024/096970
(87) International publication number: WO 2025/147071

(57) **Abstract**

An electronic device according to one embodiment of the present disclosure may comprise: a communication circuit; a memory for storing an LLM database including a plurality of large language models (LLMs), and instructions; and at least one processor. According to one embodiment, the instructions, when executed by the at least one processor, may instruct the electronic device to: receive information corresponding to at least one user utterance from an external electronic device; recognize at least one intent included in the at least one user utterance and the number of intents included in the at least one user utterance; determine a processing level required to process the at least one user utterance at least partially on the basis of the at least one intent and the number of intents; select a first LLM having performance corresponding to the determined processing level from among the plurality of LLMs; and process the at least one user utterance by using the first LLM. Various other embodiments identified through the specification are possible.

## Description

### TECHNICAL FIELD

Embodiments disclosed herein relate to a technology for processing a user utterance based on artificial intelligence.

### BACKGROUND ART

An electronic device may perform an operation corresponding to a user's voice command through speech recognition and natural language processing of an utterance. In recent years, language models that process a user utterance (or text corresponding to the user utterance) based on artificial intelligence have been widely distributed. For example, a large language model (LLM) is a language model configured as an artificial neural network having a large number of parameters, and various large language models are being developed. For example, when a plurality of language models are available, a user may directly select a language model for processing an utterance from among the plurality of language models. For example, an electronic device may process the user utterance using the language model selected by a user.

The aforementioned information may be provided as related art for the purpose of assisting understanding of the present disclosure. No claim or determination is made as to whether any of the above matters constitutes prior art related to the present disclosure.

### DISCLOSURE OF THE INVENTION

### TECHNICAL SOLUTION

An electronic device according to an embodiment disclosed herein may include a communication circuit, a large language model (LLM) database including a plurality of LLMs and a memory storing instructions, and at least one processor. According to an embodiment, the instructions, when executed by the at least one processor, may cause the electronic device to receive information corresponding to at least one user utterance from an external electronic device, identify at least one intent included in the at least one user utterance and the number of intents included in the at least one user utterance, determine a processing level required to process the at least one user utterance based at least in part on the at least one intent and the number of intents, select a first large language model (LLM) having performance corresponding to the determined processing level from among the plurality of LLMs, and process the at least one user utterance by using the first LLM.

In addition, a method for processing an utterance by an electronic device according to an embodiment disclosed herein may include receiving information corresponding to at least one user utterance from an external electronic device, identifying at least one intent included in the at least one user utterance and the number of intents included in the at least one user utterance, determining a processing level required to process the at least one user utterance based at least in part on the at least one intent and the number of intents, selecting a first large language model (LLM) having performance corresponding to the determined processing level from among a plurality of LLMs included in an LLM database, and processing the at least one user utterance by using the first LLM.

In addition, a storage medium according to an embodiment disclosed herein may store instructions, when executed by at least one processor of an electronic device, may cause the electronic device to receive information corresponding to at least one user utterance from an external electronic device, identify at least one intent included in the at least one user utterance and the number of intents included in the at least one user utterance, determine a processing level required to process the at least one user utterance based at least in part on the at least one intent and the number of intents, select a first large language model (LLM) having performance corresponding to the determined processing level from among a plurality of LLMs included in an LLM database, and process the at least one user utterance by using the first LLM.

### BRIEF DESCRIPTION OF THE DRAWINGS

With respect to the description of the drawings, the same or similar reference signs may be used for the same or similar elements.
FIG. 1 is a block diagram of an electronic device according to an embodiment.
FIG. 2 is a block diagram of a system according to an embodiment.
FIGS. 3A to 3C illustrate an interface for setting selection criteria for a language model according to an embodiment.
FIG. 4 is a view for describing an operation of a user terminal processing a user utterance, according to an embodiment.
FIG. 5 is a view for describing an operation of a user terminal processing a user utterance according to an embodiment.
FIG. 6 is a view for describing an operation of a user terminal processing a user utterance according to an embodiment.
FIG. 7 is a flowchart illustrating a method for processing an utterance by an electronic device according to an embodiment.
FIG. 8 is a flowchart illustrating a method for processing an utterance by an electronic device according to an embodiment.
FIG. 9 is a flowchart illustrating a method for processing an utterance by an electronic device according to an embodiment.
FIG. 10 is a flowchart illustrating a method for processing an utterance by an electronic device according to an embodiment.
FIG. 11 illustrates an electronic device in a network environment according to various embodiments.
FIG. 12 is a block diagram illustrating an integrated intelligence system according to an embodiment.
FIG. 13 is a diagram illustrating a form in which relationship information between concepts and actions is stored in a database according to an embodiment.
FIG. 14 is a diagram illustrating a user terminal displaying a screen for processing a voice input received through an intelligent application according to an embodiment.
FIG. 15 illustrates a generative artificial intelligence system according to an embodiment.

With respect to the description of the drawings, the same or similar reference signs may be used for the same or similar elements.

### MODE FOR CARRYING OUT THE INVENTION

Hereinafter, embodiments of the present disclosure will be described in detail with reference to the drawings so that those skilled in the art to which the present disclosure pertains may readily perform the present disclosure. However, the present disclosure may be implemented in many different forms and is not limited to the embodiments described herein. With respect to the description of the drawings, the same or similar reference signs may be used for the same or similar elements. Additionally, in the drawings and related descriptions, descriptions of well-known functions and configurations may be omitted for clarity and brevity.

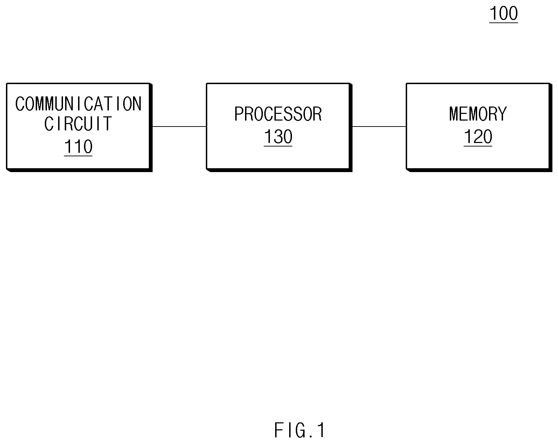

FIG. 1 is a block diagram of an electronic device according to an embodiment.

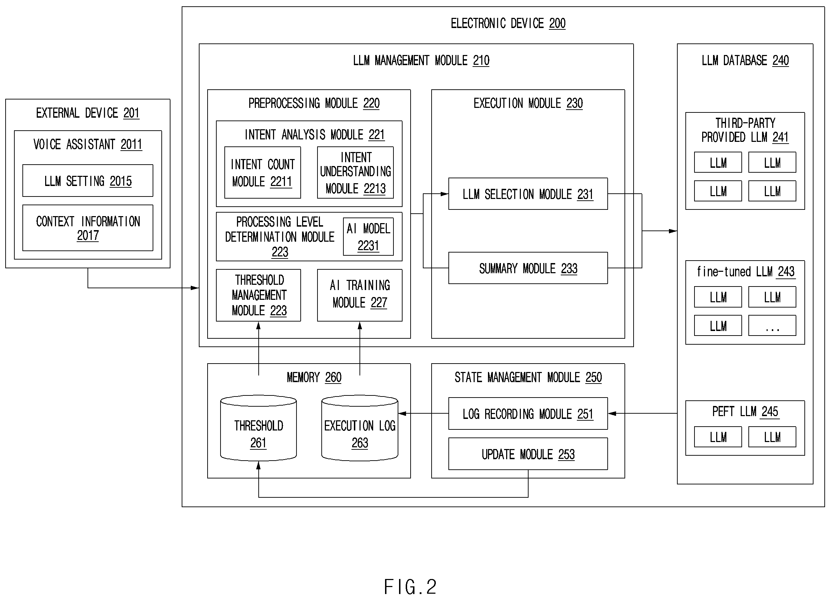

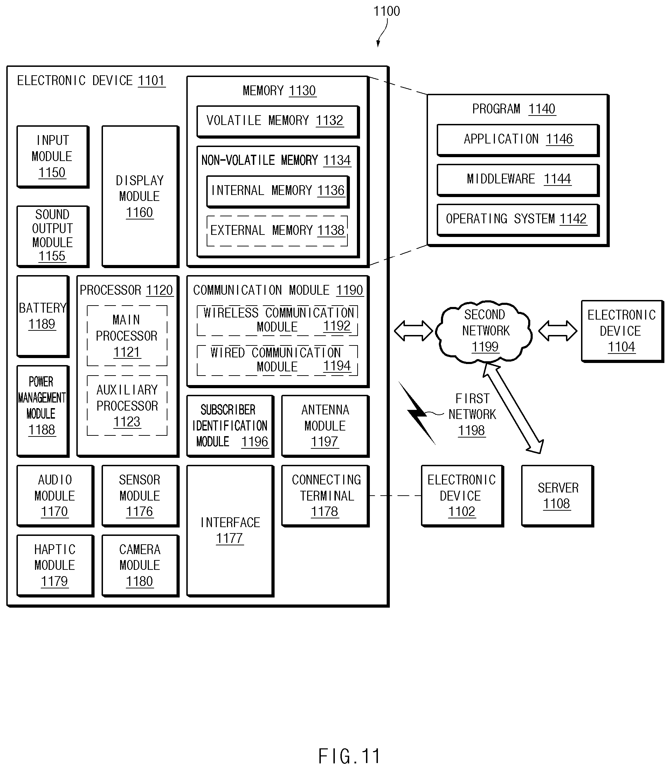

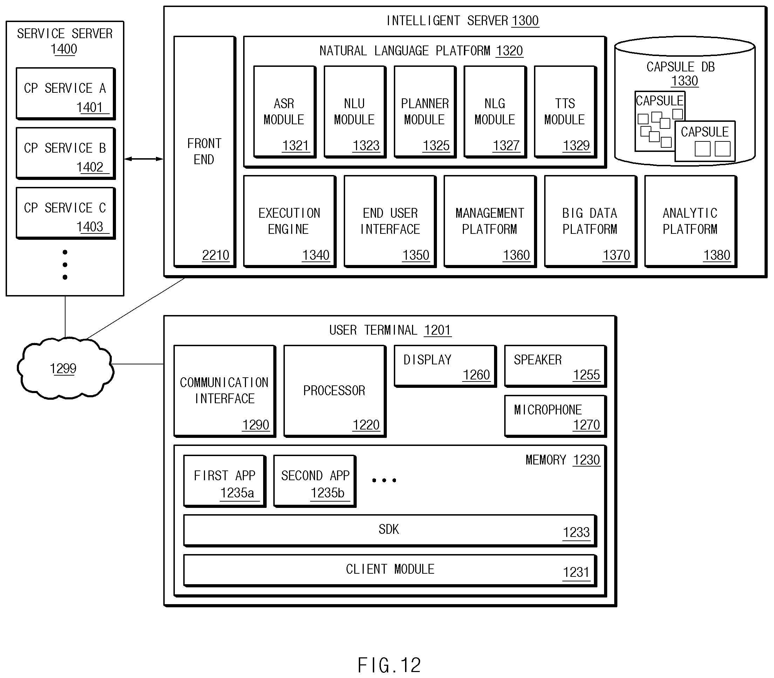

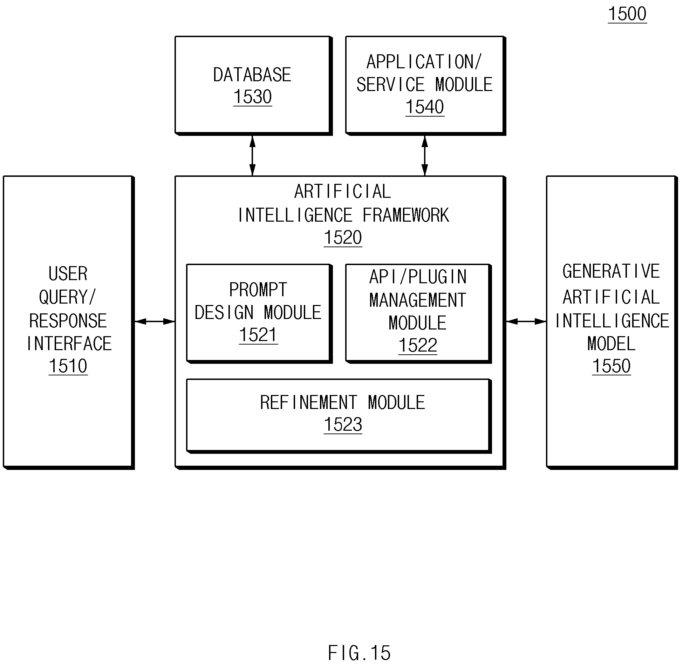

According to an embodiment, an electronic device 100 (e.g., an electronic device 200 of FIG. 2, an electronic device 1101 of FIG. 11, a user terminal 1201 or an intelligent server 1300 of FIG. 12, or a generative artificial intelligence system 1500) may include a communication circuit 110 (e.g., a communication module 1190 of FIG. 11, or a communication interface 1290 or a front end 1310 of FIG. 12), at least one processor 130 (e.g., a processor 1120 of FIG. 11, a large language model (LLM) management module 210 or a state management module 250 of FIG. 2, a processor 1220 or a natural language platform 1320 of FIG. 12, or an artificial intelligence framework 1520 of FIG. 15), and a memory 120 (e.g., an LLM database 240 or a memory 260 of FIG. 2, a memory 1130 of FIG. 11, a memory 1230 of FIG. 12, or a database 1530 of FIG. 15).

According to an embodiment, the communication circuit 110 may transmit and receive information and/or data to and from an external device and/or an external server (e.g., a server 1108 of FIG. 11). For example, the communication circuit 110 may receive, from an external electronic device (e.g., an external device 201 of FIG. 2, electronic devices 1102 and 1104 of FIG. 11, or a user terminal 1201 of FIG. 12), information associated with at least one user utterance and/or context information associated with the external electronic device. For example, the communication circuit 110 may transmit, to the external electronic device, a result of processing the user utterance (e.g., a response of a large language model (LLM) corresponding to the user utterance). In the present disclosure, although processing the "user utterance" is described, the present disclosure is not limited thereto, and a target to be processed using an LLM may include a user utterance, information corresponding to the user utterance (text information corresponding to the user utterance), and/or a user's text input.

According to an embodiment, the memory 120 may store instructions that, when executed by the processor 130, control an operation of the electronic device 100. According to an embodiment, the instructions may be stored in one memory 120 or a plurality of memories 120. According to an embodiment, the memory 120 may include an LLM database including a plurality of LLMs. According to an embodiment, although the LLM database has been described as being included in the memory 120 of the electronic device 100, the present disclosure is not limited thereto, and the LLM database may be located outside the electronic device 100, or a plurality of LLM databases may be located in the electronic device 100 and outside the electronic device 100.

According to an embodiment, the processor 130 may receive, through the communication circuit 110, information corresponding to at least one user utterance from the external electronic device. According to an embodiment, when the electronic device 100 includes a microphone (not shown), the processor 130 may obtain information corresponding to the user utterance received through the microphone.

According to an embodiment, the processor 130 may identify at least one intent included in the at least one user utterance and the number of intents. For example, the user utterance may include at least one intent. For example, the at least one user utterance may include one user utterance, a plurality of consecutive user utterances, and/or a plurality of related user utterances received with a predetermined time interval.

According to an embodiment, the processor 130 may determine a processing level required to process the at least one user utterance based at least in part on the at least one intent and the number of intents. For example, the processor 130 may determine a complexity of the user utterance based on at least one intent and/or the number of intents. For example, the complexity of the user utterance may be related to the number of processing steps required to process the user utterance. For example, the processing level may be determined based on at least one of the number of processing steps required to process the user utterance, a processing speed, an amount of data capable of being processed, a computational amount, a type of input data, an inference capability of learning, the number of plug-ins available to the LLM, context information associated with the external electronic device, and/or a combination thereof.

According to an embodiment, the processor 130 may receive the context information associated with the external electronic device from the external electronic device. The processor 130 may determine the processing level based at least in part on the context information. For example, the context information may include a user profile, the number of available plug-ins, personal information stored in the external electronic device (e.g., schedule information), and/or information related to a state of the external electronic device.

According to an embodiment, the processor 130 may obtain input data associated with at least one user utterance. The processor 130 may determine the processing level based at least in part on the type of the input data. For example, the input data may include data provided to the LLM (e.g., a document file, an image file, an audio file, a video file, and/or a combination thereof). For example, the processor 130 may determine the processing level based at least in part on whether the type of the input data is text, audio, an image, a video, and/or a combination thereof.

According to an embodiment, the processor 130 may predict at least one of the number of processing steps required to process the at least one user utterance, a processing time, a processing speed, a computational amount, or a combination thereof by using a trained artificial intelligence model. The processor 130 may determine the processing level based at least in part on a prediction result. For example, the artificial intelligence model may be trained using at least one of at least one language model, a deep learning model, an artificial neural network, a deep neural network, and/or a combination thereof. For example, the artificial intelligence model may be trained based on preprocessed user utterances, processing histories of the user utterances, and/or summary information regarding operations of processing the user utterances.

According to an embodiment, the processor 130 may receive a user setting value related to LLM selection criteria from an external electronic device (e.g., a device that has received the user utterance). For example, the user setting value may be set based on a user input received through an interface provided by the external electronic device. For example, the LLM selection criteria may include performance of the LLM (e.g., a maximum capacity of the LLM, a size, a processing speed, the number of parameters, the number of supported plug-ins, and/or a specialized field) and/or whether an automatic change function of the LLM is activated. The processor 130 may select a first LLM from among the plurality of LLMs based at least in part on the user setting value.

According to an embodiment, the processor 130 may select a first LLM having performance corresponding to the determined processing level from among a plurality of large language models (LLMs). For example, the processor 130 may select the first LLM from an LLM database including the plurality of LLMs.

According to an embodiment, the processor 130 may select at least one category from among categories of the plurality of LLMs based on at least one intent included in the user utterance. The processor 130 may select the first LLM from among LLMs belonging to the at least one selected category based on the number of intents included in the user utterance.

According to an embodiment, the processor 130 may select the first LLM based on a result of comparing the determined processing level with a preset threshold. For example, one or more thresholds may be preset. The threshold may be set to divide the processing level into a plurality of ranges. For example, each of the plurality of ranges may correspond to performance of an LLM. For example, the processor 130 may select one of LLMs having performance corresponding to the processing level from among the plurality of LLMs based on a result of comparing the processing level with the threshold.

According to an embodiment, the processor 130 may process the at least one user utterance using the first LLM. For example, the processor 130 may query the first LLM with the user utterance. For example, the processor 130 may provide the first LLM with a prompt corresponding to the user utterance and obtain a response to the prompt from the first LLM.

According to an embodiment, the processor 130 may select a second LLM corresponding to a processing state from among the plurality of LLMs based on recognizing that the processing state of the at least one user utterance does not correspond to the determined processing level, during processing of at least one user utterance using the first LLM. For example, the processor 130 may recognize that a current processing state of the user utterance (e.g., the number of processing steps, a type of input data, a processing speed, context information associated with the external electronic device, an intent of the user utterance, and/or the number of intents included in the user utterance) does not correspond to the determined processing level. For example, the processor 130 may recognize a case in which a new user utterance is additionally input (an intent included in the user utterance may be changed or added, or the number of intents may be changed according to the additional user utterance), a case in which a processing step exceeds a previously predicted processing level while processing the user utterance, a case in which more input data is required or provided, and a case in which an LLM having higher performance or an LLM having different performance is required in order to process the user utterance (or in order to increase accuracy of a processing result of the user utterance). For example, when the processing state of the user utterance does not correspond to the determined processing level, the processor 130 may select the second LLM more suitable for the processing state of the user utterance. The processor 130 may change the LLM used for processing the user utterance from the first LLM to the second LLM.

According to an embodiment, the processor 130 may generate summary information summarizing processing details of at least one user utterance using the first LLM. For example, the processor 130 may generate the summary information by extracting at least some of information corresponding to each processing step of processing the user utterance. For example, the summary information may include at least some of information corresponding to the user utterance and/or information obtained by using the first LLM. The summary information may include a smaller number of tokens than the number of tokens included in information input to the first LLM and/or information obtained from (output from) the first LLM. For example, the processor 130 may tokenize and manage information input to the first LLM and/or information obtained from (output from) the first LLM. For example, the processor 130 may generate the summary information including some of tokens obtained from information input to the LLM and/or information obtained from (output from) the first LLM.

According to an embodiment, the processor 130 may provide the summary information to the second LLM. For example, the processor 130 may provide the summary information to the second LLM as an input (e.g., a prompt for the second LLM).

According to an embodiment, the processor 130 may process at least one user utterance by using the second LLM. For example, the processor 130 may generate a prompt related to an intent included in the user utterance based on information corresponding to the at least one user utterance and provide the prompt to the second LLM. The processor 130 may obtain a response to the prompt from the second LLM.

According to an embodiment, the processor 130 may transmit, through the communication circuit 110, a result of processing the user utterance by using an LLM (e.g., the first LLM and/or the second LLM) to an external electronic device (e.g., a device that has received the user utterance).

According to an embodiment, operations described as being performed by the processor 130 may be performed by at least one processor 130. For example, each of the above-described operations may be performed by the same or different one processor 130, and/or may be performed by at least some of a plurality of processors 130. For example, at least some of the above-described operations may be performed by a first processor 130, and at least some of the remainder may be performed by a second processor 130. According to an embodiment, the processor 130 may include a circuit such as a central processing unit (CPU), a microprocessor unit (MPU), an application processor (AP), a communication processor (CP), a system on chip (SoC), and/or an Integrated Circuit (IC).

According to various embodiments, a configuration of the electronic device 100 is not limited to that described with reference to FIG. 1, and at least some components may be omitted or at least some components (e.g., at least one of components of an electronic device 200 of FIG. 2, components of an electronic device 1101 of FIG. 11, or components of a user terminal 1201 and/or an intelligent server 1300 of FIG. 12) may be added. According to an embodiment, although the electronic device 100 has been described as receiving information associated with the user utterance and/or context information associated with the external electronic device from the external electronic device, the present disclosure is not limited thereto, and the electronic device 100 may obtain information associated with the user utterance and/or context information associated with the electronic device. For example, when the electronic device 100 is implemented as an on-device rather than a server device, the electronic device 100 may receive the user utterance through a microphone and/or recognize context information of the electronic device 100.

According to an embodiment, the electronic device 100 may determine the processing level required to process the user utterance and select, from among a plurality of LLMs, an LLM having performance suitable for processing the user utterance based on the processing level, thereby increasing accuracy of utterance processing, optimizing a service cost, and increasing efficiency of utterance processing. For example, the electronic device 100 may increase accuracy and quality of a response to the utterance and optimize resources and costs consumed for utterance processing by selecting an LLM having a scale corresponding to complexity of the user utterance based on the complexity of the user utterance and processing the utterance. For example, the electronic device 100 may increase efficiency (e.g., token efficiency) of processing a user utterance using the LLM by storing and utilizing summary information summarizing information on an operation for processing the user utterance.

FIG. 2 is a block diagram of a system according to an embodiment.

According to an embodiment, the system may include an electronic device 200 (e.g., the electronic device 100 of FIG. 1, the electronic device 200 of FIG. 2, an electronic device 1101 of FIG. 11, a user terminal 1201 or an intelligent server 1300 of FIG. 12, or the generative artificial intelligence system 1500 of FIG. 15) and an external device 201 (e.g., the external device 201 of FIG. 2, electronic devices 1102 and 1104 of FIG. 11, or a user terminal 1201 of FIG. 12). For example, although the system has been described as including a plurality of devices, the present disclosure is not limited thereto, and a system for processing a user utterance may be implemented as one device (e.g., the electronic device 200).

According to an embodiment, the external device 201 may include a voice assistant 2011. According to an embodiment, the external device 201 may receive a user utterance. For example, the voice assistant 2011 may analyze the user utterance and perform an action corresponding to the user utterance. According to an embodiment, the voice assistant 2011 may include LLM settings 2015 and context information 2017. For example, the LLM settings 2015 may include a user setting value related to LLM selection criteria. The voice assistant 2011 may receive the user setting value related to the LLM selection criteria from a user through an interface. For example, the LLM selection criteria may include performance of the LLM (e.g., a maximum capacity of the LLM, a size, a processing speed, the number of parameters, the number of supported plug-ins, and/or a specialized field) and/or whether an automatic change function of the LLM is activated. For example, the context information 2017 may include a user profile, the number of available plug-ins, personal information stored in the external device 201 (e.g., schedule information), and/or information related to a state of the external device 201.

The external device 201 may provide the LLM settings 2015 and the context information 2017 to the electronic device 200 through the voice assistant 2011. The external device 201 may provide information associated with the user utterance to the electronic device 200. The external device 201 may receive a result of processing the user utterance from the electronic device 200 and provide the result of processing the user utterance through the voice assistant 2011.

According to an embodiment, the electronic device 200 may include an LLM management module 210, an LLM database 240, a state management module 250, and a memory 260.

According to an embodiment, the LLM management module 210 may dynamically select or change an LLM suitable for processing the user utterance from the LLM database 240 based at least in part on the user utterance. According to an embodiment, the LLM management module 210 may include a preprocessing module 220 and an execution module 230.

According to an embodiment, the preprocessing module 220 may generate and/or extract information used for selecting the LLM suitable for processing the user utterance based on input information (e.g., information corresponding to the user utterance, information related to input data, a threshold 261, the LLM settings 2015 (the user setting value), and/or the context information 2017). According to an embodiment, the preprocessing module 220 may include an intent analysis module 221, a processing level determination module 223, a threshold (261) management module 225, and an AI training module 227.

According to an embodiment, the intent analysis module 221 may include an intent count module 2211 and an intent understanding module 2213. For example, the intent count module 2211 may identify the number of intents included in at least one user utterance. For example, the intent understanding module 2213 may analyze at least one user utterance and identify (and/or understand) intents included in the user utterance. According to an embodiment, the intent understanding module 2213 and/or the intent count module 2211 may include at least one of at least one language model (e.g., an LLM), a deep learning model, a prompt engineering model, and/or a deep neural network model.

According to an embodiment, the processing level determination module 223 may determine complexity of the user utterance based on the number of intents included in the user utterance.

For example, when an AI model 2231 (e.g., a generative artificial intelligence model 1550 of FIG. 15) of the processing level determination module 223 is not trained, the processing level determination module 223 may determine the LLM selection criteria based on a result of comparing complexity of the user utterance (e.g., the number of intents included in the user utterance) with first thresholds. The processing level determination module 223 may provide information on the LLM selection criteria to the execution module 230 (e.g., an LLM selection module 231).

For example, it is assumed that the number of intents included in the user utterance is x and the first thresholds are 2 and 4.

**[Table 1]**

| Comparison between the number of intents with first thresholds | LLM selection criteria (performance of LLM (e.g., LLM size)) |
|---|---|
| x < 2 | Small size (e.g., 1B) |
| 2 ≤ x < 4 | Medium size (e.g., 13B) |
| 4 ≤ x | Large size (e.g., 70B) |

Referring to Table 1, the processing level determination module 223 may determine that an LLM having relatively low performance (e.g., a relatively small size) is selected when the number of intents is less than 2. The processing level determination module 223 may determine that an LLM having medium performance (e.g., a medium size) is selected when the number of intents is equal to or greater than 2 and less than 4. The processing level determination module 223 may determine that an LLM having relatively high performance (e.g., a relatively large size) is selected when the number of intents is equal to or greater than 4. For example, contents illustrated in Table 1 are merely examples and are not limited thereto. For example, performance of the LLM may be determined based on factors other than size, and the size of the LLM may be set as a specific value (e.g., 1B, 13B, or 70B) rather than a relative size.

According to an embodiment, the processing level determination module 223 may determine a category of an LLM to be selected based on the intent included in the user utterance. The processing level determination module 223 may provide information on the determined category for selecting one from among LLMs belonging to the selected category to the execution module 230 (e.g., an LLM selection module 231).

**[Table 2]**

| Intent | LLM category | LLM settings (2015) (e.g., whether automatic change is activated) |
|---|---|---|
| Coding | Fine-tuned LLM (243) | No |
| Device control | Third-party-provided LLM (241) | Yes |
| Chat | Fine-tuned LLM (243) | Yes |
| User specific | PEFT LLM (245) | Yes |

Referring to Table 2, the processing level determination module 223 may determine that an LLM of a fine-tuned LLM category is selected when the intent included in the user utterance is related to coding or chat, determine that an LLM of a third-party-provided LLM (241) (e.g., an LLM provided by a specific service provider) category is selected when the intent is related to device control, and determine that an LLM of a PEFT LLM (245) category is selected when the intent corresponds to a user-specified intent. In Table 2, the LLM settings 2015 (e.g., whether automatic change is activated) may indicate whether the LLM settings 2015 corresponds to a user setting value related to the LLM selection criteria. For example, the processing level determination module 223 may determine a category of an LLM to be selected and/or LLM selection criteria according to the user setting value, and/or determine whether to activate or deactivate a function of dynamically changing an LLM selected by the electronic device 200. For example, contents described in Table 2 are merely examples and are not limited thereto. For example, the category of the LLM or a classification criterion may be changed.

According to an embodiment, the processing level determination module 223 may determine a processing level (e.g., the number of processing steps) required to process the user utterance. For example, the processing level determination module 223 may include the AI model 2231 used to determine the processing level. For example, the AI model 2231 may include a deep neural network model configured to predict a processing level (e.g., the number of processing steps) required to process the user utterance based on information extracted from the user utterance (e.g., an intent included in the user utterance and/or the number of intents), the LLM settings 2015 (a user setting value) received from the external device 201, and/or the context information 2017.

For example, with reference to Table 3 below, a description will be given assuming a case in which the processing level determination module 223 predicts the number of processing steps required to process the user utterance based on an artificial intelligence model and sets the LLM selection criteria based on the number of processing steps. For example, the processing level determination module 223 may predict the number of processing steps required to process the user utterance by using the artificial intelligence model and determine the LLM selection criteria based on a result of comparing the number of processing steps with at least one second threshold.

**[Table 3]**

| Processing level | Comparison with second threshold | LLM selection criteria (performance of LLM (e.g., LLM size)) |
|---|---|---|
| Number of processing steps (y) | y < 3 | Small size (e.g., 1B) |
| Number of processing steps (y) | 3 ≤ y < 5 | Medium size (e.g., 13B) |
| Number of processing steps (y) | 5 ≤ y | Large size (e.g., 70B) |

Referring to Table 3, the processing level determination module 223 may determine that an LLM having relatively low performance (e.g., a relatively small size) is selected when the predicted number of processing steps is less than 3. The processing level determination module 223 may determine that an LLM having medium performance (e.g., a medium size) is selected when the predicted number of processing steps is equal to or greater than 3 and less than 5. The processing level determination module 223 may determine that an LLM having relatively high performance (e.g., a relatively large size) is selected when the predicted number of processing steps is equal to or greater than 5. The processing level determination module 223 may change the LLM selection criteria based on recognizing that a processing state of the user utterance does not correspond to a previously determined processing level during processing of the user utterance. For example, when the number of processing steps predicted based on the artificial intelligence model is 4, the processing level determination module 223 may determine that an LLM having a medium size is selected. For example, during processing of the user utterance, a current processing step may exceed the predicted number of processing steps of 4. In this case, the processing level determination module 223 may recognize that the determined processing level does not correspond to a current processing state of the user utterance. For example, the processing level determination module 223 may recognize that it is necessary to use an LLM having higher performance in order to process the user utterance. The processing level determination module 223 may change the LLM selection criteria so as to select an LLM corresponding to the current processing state based on the second thresholds. For example, the electronic device 200 may change the LLM selection criteria to select an LLM having relatively high performance (e.g., a relatively large size) and provide information on the changed LLM selection criteria to the execution module 230 (e.g., the LLM selection module 231). For example, the processing level determination module 223 may cause the execution module 230 (e.g., the LLM selection module 231) to change the previously selected LLM (previously used LLM) to an LLM suitable for a current processing state of the user utterance.

For example, although Table 3 has been described on the assumption that the processing level is the number of processing steps, the present disclosure is not limited thereto. For example, the processing level may be determined based on various factors related to performance of the LLM including a processing speed and/or a computational amount in addition to the number of processing steps, and the second threshold may be changed to another value.

According to an embodiment, the threshold (261) management module 225 may extract, from thresholds 261 stored in the memory 260, a threshold 261 required to determine the processing level and provide the threshold 261 to the processing level determination module 223.

According to an embodiment, the AI training module 227 may train the AI model 2231 used for determining the processing level. For example, the AI training module 227 may update the AI model 2231 by learning information extracted from the user utterance (e.g., an intent included in the user utterance and/or the number of intents), the LLM settings 2015 (the user setting value) received from the external device 201, and/or the context information 2017.

According to an embodiment, the execution module 230 may select, from the LLM database 240, an LLM suitable for processing the user utterance and process the user utterance by using the selected LLM. For example, the execution module 230 may input information corresponding to the user utterance to the selected LLM and obtain a response to the user utterance from the selected LLM. According to an embodiment, the execution module 230 may include an LLM selection module 231 and a summary module 233.

According to an embodiment, the LLM selection module 231 may select, from the LLM database 240, an LLM for processing the user utterance based on information associated with the user utterance (e.g., an intent included in the user utterance and/or the number of intents) and/or the processing level. For example, the LLM selection module 231 may select, from the LLM database 240, an LLM having performance (e.g., a maximum capacity of the LLM, a size, a processing speed, the number of parameters, the number of supported plug-ins, and/or a specialized field) corresponding to information delivered from the preprocessing module 220 based on information delivered from the preprocessing module 220 (e.g., the intent included in the user utterance, the number of intents included in the user utterance, and/or the processing level). For example, the LLM selection module 231 may process the user utterance by using the selected LLM.

According to an embodiment, the summary module 233 may generate summary information summarizing processing details of at least one user utterance. For example, the summary module 233 may generate the summary information by extracting some of information corresponding to each processing step of processing the user utterance. For example, the summary information may include at least some of information corresponding to the user utterance and/or information obtained by using the first LLM. The summary information may include a smaller number of tokens than the number of tokens included in information input to the first LLM and/or information obtained from (output from) the first LLM.

According to an embodiment, at least some of components of the LLM management module 210 and the state management module 250 may be implemented as at least one hardware component (e.g., the at least one processor 130 of FIG. 1 or a processor 1120 of FIG. 11).

According to an embodiment, the LLM database 240 may store a plurality of LLMs. For example, the LLM database 240 may store the plurality of LLMs for each classified category. For example, categories of the LLMs may be classified according to an LLM provider (for example, a third-party-provided LLM) and a tuning scheme (e.g., a fine-tuned LLM 243 or a parameter efficiency fine-tuned (PEFT) LLM), but are not limited thereto. For example, the LLMs may be categorized and stored for each specialized field. According to an embodiment, the LLM database 240 may be located inside and/or outside the electronic device 200. For example, at least some of the plurality of LLMs may be stored in the electronic device 200, and the remaining ones may be stored outside the electronic device 200. According to an embodiment, the LLM database 240 and the memory 260 may be implemented as separate storage devices, or may be implemented in different regions within one storage device (e.g., the memory 120 of FIG. 1 or a memory 1130 of FIG. 11).

According to an embodiment, the state management module 250 may include a log recording module 251 and an update module 253.

According to an embodiment, the log recording module 251 may store, in an execution log 263, a history of processing a user utterance using the selected LLM. For example, the log recording module 251 may store, in the execution log 263, the summary information generated by the summary module 233.

According to an embodiment, the update module 253 may update at least one threshold 261 based on the history of processing a user utterance by using the selected LLM and/or the summary information. For example, the update module 253 may change at least one of previously stored thresholds 261 to another value based on the processing history of the user utterance and/or the summary information.

According to an embodiment, the memory 260 may store at least one threshold 261 and the execution log 263. For example, the memory 260 may store at least one threshold 261 used for determining the processing level required to process the user utterance. For example, the execution log 263 may include the history of processing the user utterance by using the LLM and/or the summary information.

According to various embodiments, a configuration of the electronic device 200 is not limited to that described with reference to FIG. 2, and at least some components may be omitted or at least some components (e.g., at least one of components of the electronic device 100 of FIG. 1, components of an electronic device 1101 of FIG. 11, or components of a user terminal 1201 and/or an intelligent server 1300 of FIG. 12) may be added. According to an embodiment, although the electronic device 100 has been described as receiving information associated with the user utterance and/or context information associated with the external device 201 from the external device 201, the present disclosure is not limited thereto, and the electronic device 200 may directly obtain information associated with the user utterance and/or context information associated with the electronic device 200. For example, the system may be implemented in a form of an on-device in which the electronic device 200 and the external device 201 are integrated.

The electronic device 200 according to an embodiment of the present disclosure may dynamically select or change, from among a plurality of LLMs, an LLM having a function suitable for processing the user utterance, thereby improving accuracy and reliability of the result of processing the user utterance using the LLM and increasing user convenience. The electronic device 200 may summarize, manage, and utilize the processing details of the user utterance, thereby increasing the efficiency (for example, token efficiency) of processing the user utterance.

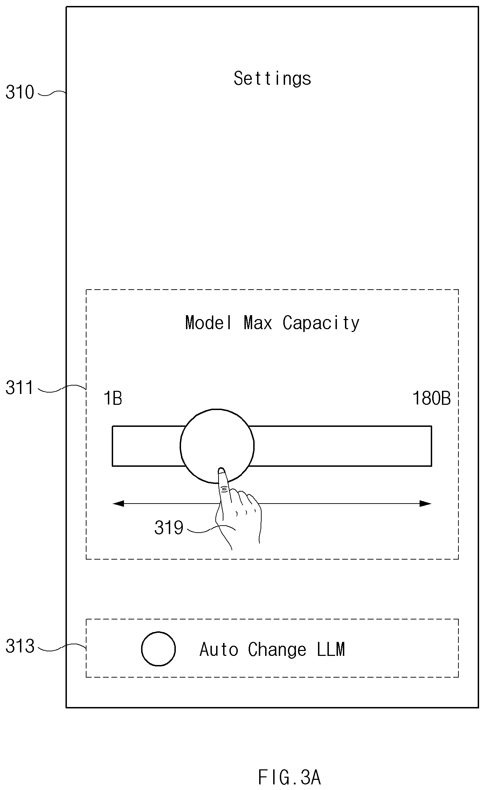

FIGS. 3A to 3C illustrate interfaces for setting selection criteria for a language model according to an embodiment. For example, when interfaces 310, 320, and 330 are provided in an external electronic device (e.g., the external device 201 of FIG. 2, electronic devices 1102 and 1104 of FIG. 11, or a user terminal 1201 of FIG. 12), an electronic device (e.g., the electronic device 100 of FIG. 1, the electronic device 200 of FIG. 2, an electronic device 1101 of FIG. 11, a user terminal 1201 or the intelligent server 1300 of FIG. 12, or a generative artificial intelligence system 1500) may receive, from the external electronic device, a user setting value set through the interfaces 310, 320, and 330. For example, when the interfaces 310, 320, and 330 are provided in the electronic device, the electronic device may set a user setting value related to selection criteria for a language model based on a user input received through the interfaces 310, 320, and 330.

Referring to FIG. 3A, a first interface 310 may include a first region 311 for setting a maximum capacity of an LLM and a second region 313 for activating an automatic change function of the LLM. For example, the electronic device may set the maximum capacity of the LLM based on a user input 319 received through the first region 311 of the first interface 310. The electronic device may activate or deactivate the automatic change function of the LLM based on the user input 319 received through the second region 313 of the first interface 310. For example, the automatic change function of the LLM may be a function that enables the electronic device to dynamically select and change an LLM suitable for automatically processing the user utterance during processing of the user utterance. For example, when the automatic change function of the LLM is activated, the electronic device may select or change the LLM suitable for processing the user utterance from among a plurality of LLMs without a separate user input during processing of the user utterance.

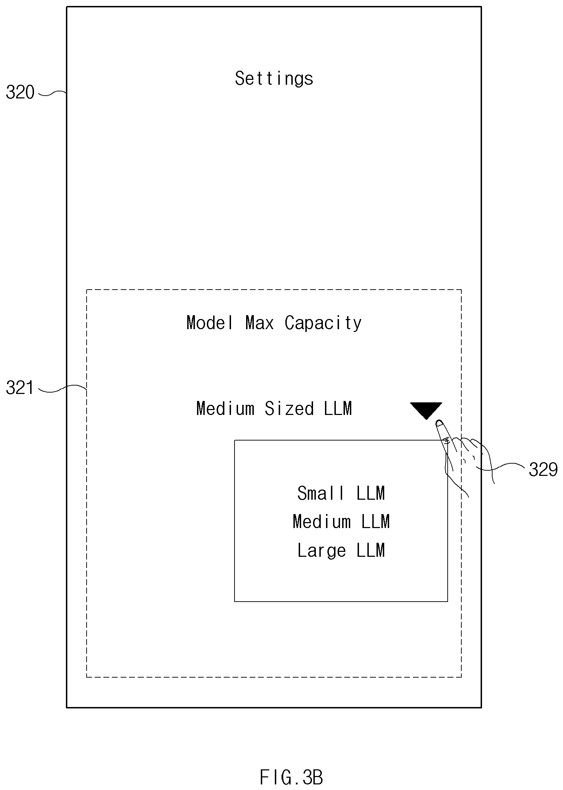

Referring to FIG. 3B, a second interface 320 may include a third region 321 for setting a size condition of the LLM. For example, the electronic device may determine a size of the LLM to be used based on a user input 329 received through the third region 321 of the second interface 320. For example, FIG. 3B illustrates a case in which three sizes of the LLM (e.g., a small LLM, a medium LLM, and a large LLM) are settable, but embodiments of the present disclosure are not limited thereto.

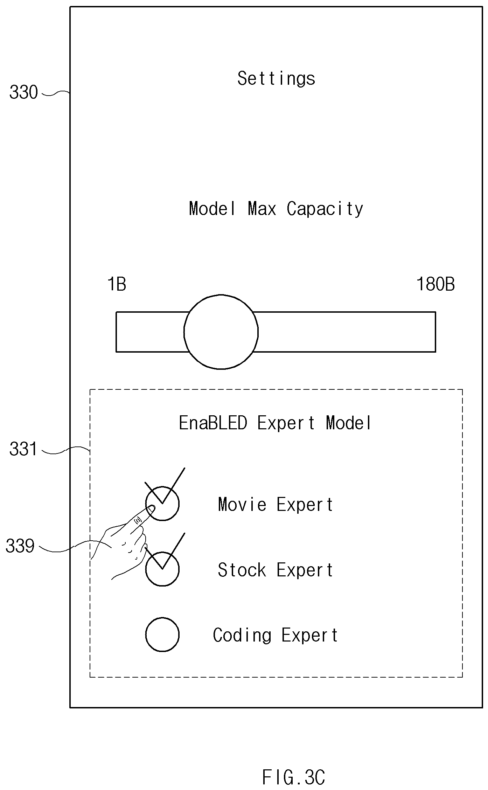

Referring to FIG. 3C, a third interface 330 may include a fourth region 331 for setting a category condition of the LLM. For example, categories of the LLM may indicate LLMs specialized for each specific field. For example, categories of the LLM may be related to intents included in the user utterance (e.g., movie, stock, or coding). For example, names of classification criteria (e.g., "enabled expert model") and category names (e.g., "movie expert", "stock expert", and "coding expert") displayed in the interface are merely examples, and names referring to classification criteria, categories, and/or the LLM in the interface may be changed or designated by a user input 339. For example, FIG. 3C illustrates a case in which categories of the LLM are classified according to specialized fields (e.g., movie, stock, coding), but the present disclosure is not limited thereto, and the number of categories is not limited to that illustrated in FIG. 3C. For example, categories of the LLM may be classified according to a provider of the LLM (e.g., a third-party-provided LLM) and/or a tuning scheme (e.g., a fine-tuned LLM, a parameter efficient fine tuning (PEFT) LLM). For example, the electronic device may determine a category of the LLM to be selected based on the user input 339 received through the fourth region 331 of the third interface 330.

According to various embodiments, interfaces for setting language model selection criteria are not limited to those illustrated and described with reference to FIGS. 3A to 3C, and the selection criteria and/or a form of the interfaces may be changed.

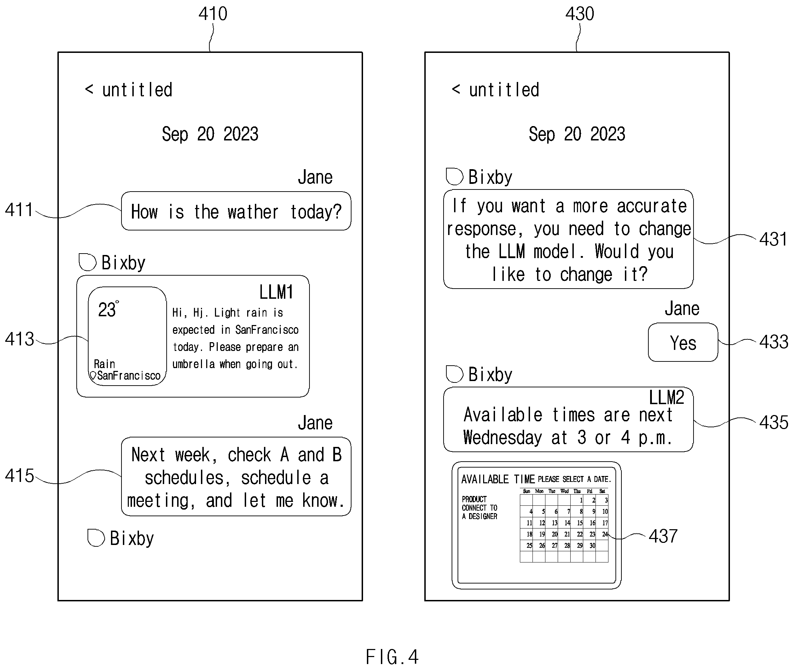

FIG. 4 is a view for describing an operation of a user terminal processing a user utterance, according to an embodiment. For example, FIG. 4 illustrates an example in which a user utterance is processed through a voice assistant function of a user terminal (e.g., the electronic device 100 of FIG. 1, the external device 201 of FIG. 2, electronic devices 1102 and 1104 of FIG. 11, a user terminal 1201 of FIG. 12, or a generative artificial intelligence system 1500), and illustrates interface screens 410 and 430 related to the voice assistant function.

According to an embodiment, the user terminal may input a query 411 to the LLM based on information corresponding to the user utterance. For example, the user terminal may generate a prompt 411 corresponding to the user utterance and input the prompt 411 to the LLM. For example, the user terminal may determine a processing level required to process the user utterance and select a first LLM from among a plurality of LLMs based on the determined processing level. The user terminal may process the user utterance using the first LLM. For example, when the user terminal receives a first user utterance "How is the weather today?" from a user (e.g., Jane), the user terminal may select, from among the plurality of LLMs, the first LLM capable of responding to a query about today's weather based on information corresponding to the first user utterance. The user terminal may input a query 411 corresponding to the user utterance to the first LLM. The user terminal may obtain an answer (response) 413 to the query (that is, the first user utterance) 411 from the first LLM.

Thereafter, the user terminal may receive a second user utterance related to schedule management. The user terminal may input a query 415 corresponding to the second user utterance to the first LLM. The user terminal may determine whether the second user utterance is processable using the selected first LLM. For example, due to the second user utterance, the number of intents included in user utterances (e.g., the first user utterance and the second user utterance) may increase. For example, an intent included in the first user utterance may be "weather," and an intent included in the second user utterance may be "schedule settings." When the user terminal determines that the second user utterance is not processable by using the first LLM (e.g., when accuracy of the answer is expected to be low when the second user utterance is processed by using the first LLM), the user terminal may prompt (431) the user to change the LLM. For example, when the user terminal determines that an LLM having higher performance (e.g., a larger size) is required since the number of intents included in the user utterances increases, the user terminal may prompt (431) the user to change the LLM.

For example, when a user input 433 agreeing to change the LLM is received from the user, the user terminal may change the LLM used to process the second user utterance from the first LLM to a second LLM capable of responding to the query 415 about schedule setting. The user terminal may provide a result of processing the second user utterance by using the second LLM (e.g., answers (responses) 435 and 437 to the second user utterance).

Although FIG. 4 illustrates that the user terminal performs all operations of receiving user utterances, selecting an LLM based on the user utterances, and processing the user utterances by using the selected LLM, the user terminal may perform at least some operations in association with an external server (e.g., the electronic device 100 of FIG. 1, the electronic device 200 of FIG. 2, an electronic device 1101 of FIG. 11, or a user terminal 1201 or an intelligent server 1300 of FIG. 12). For example, the user terminal may transmit information corresponding to the user utterance to the external server, the external server may select an LLM suitable for the user utterance and process the user utterance by using the selected LLM, and the user terminal may receive a result of processing the user utterance from the external server and provide the result to the user.

The user terminal (and/or an external server) according to an embodiment may dynamically select, from among a plurality of LLMs, an LLM suitable for processing the user utterance, or change the LLM to the suitable LLM, based at least in part on the user utterance, thereby improving a processing speed, processing performance, and/or accuracy of the user utterance.

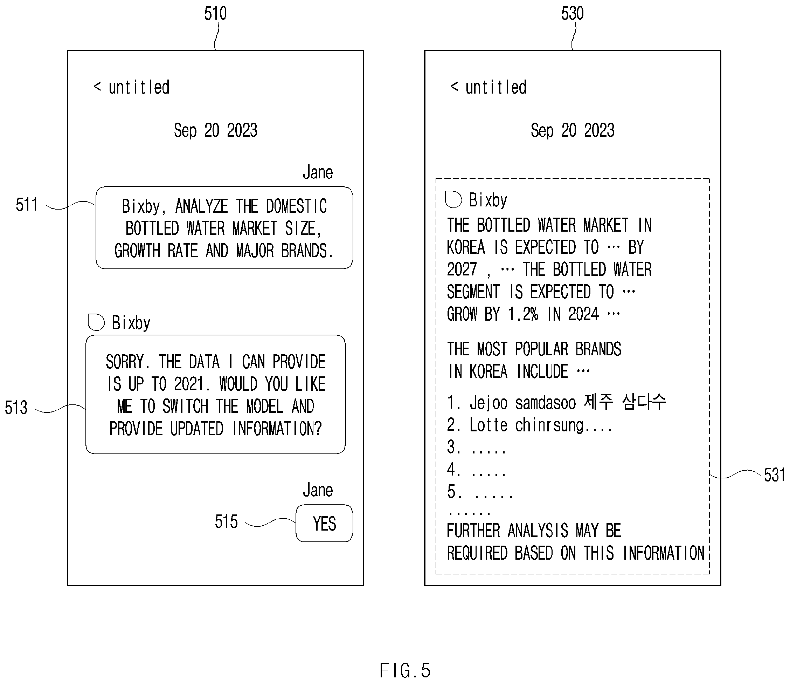

FIG. 5 is a view for describing an operation of a user terminal processing a user utterance according to an embodiment. For example, FIG. 5 illustrates an example in which a user utterance is processed through a voice assistant function of a user terminal (e.g., the electronic device 100 of FIG. 1, the external device 201 of FIG. 2, electronic devices 1102 and 1104 of FIG. 11, a user terminal 1201 of FIG. 12, or a generative artificial intelligence system 1500), and illustrates interface screens 510 and 530 related to the voice assistant function. Hereinafter, descriptions overlapping with those of FIG. 4 will be omitted or briefly described.

According to an embodiment, the user terminal may input a query 511 to an LLM based on information corresponding to the user utterance. The user terminal may determine a processing level required to process the user utterance and select a first LLM from among a plurality of LLMs based on the determined processing level. The user terminal may process the user utterance using the first LLM. For example, the user terminal may input a query 511 such as "Please analyze the domestic bottled water market size, growth rate, and major brands" to the first LLM by using the voice assistant function.

For example, when the user terminal determines that the user utterance is not processable by using the first LLM (e.g., when accuracy of an answer is expected to be low when the user utterance is processed by using the first LLM), the user terminal may prompt (513) the user to change the LLM. For example, when the user terminal determines that an LLM having higher performance (e.g., a larger size) is required based on an intent included in the user utterance, the user terminal may prompt (513) the user to change the LLM.

For example, when an input 515 agreeing to change the LLM is received from the user, the electronic device may change the LLM used to process the user utterance from the first LLM to a second LLM. The electronic device may provide a result of processing the user utterance by using the second LLM (e.g., an answer (response) 531 to a second user utterance).

Although FIG. 5 illustrates that the user terminal performs all operations of receiving user utterances, selecting an LLM based on the user utterances, and processing the user utterances by using the selected LLM, the user terminal may perform at least some operations in association with an external server (e.g., the electronic device 100 of FIG. 1, the electronic device 200 of FIG. 2, an electronic device 1101 of FIG. 11, or a user terminal 1201 or an intelligent server 1300 of FIG. 12). For example, the user terminal may transmit information corresponding to the user utterance to the external server, the external server may select an LLM suitable for the user utterance and process the user utterance by using the selected LLM, and the user terminal may receive a result of processing the user utterance from the external server and provide the result to the user.

The user terminal (and/or an external server) according to an embodiment may dynamically select, from among a plurality of LLMs, an LLM suitable for processing the user utterance, or change the LLM to the suitable LLM, based at least in part on the user utterance, thereby improving a processing speed, processing performance, and/or accuracy of the user utterance.

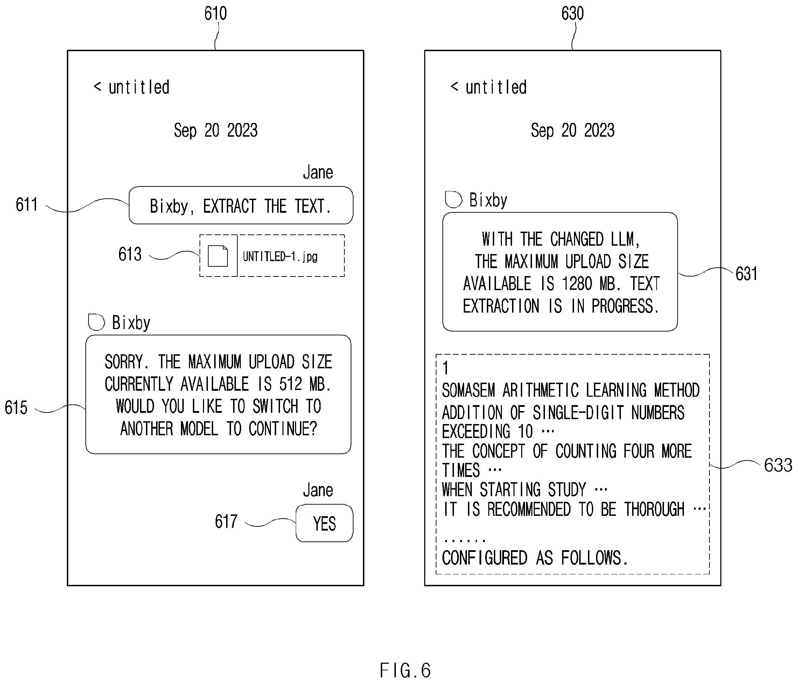

FIG. 6 is a view for describing an operation of an electronic device processing a user utterance according to an embodiment. For example, FIG. 6 illustrates an example in which a user utterance is processed through a voice assistant function of a user terminal (e.g., the electronic device 100 of FIG. 1, the external device 201 of FIG. 2, electronic devices 1102 and 1104 of FIG. 11, a user terminal 1201 of FIG. 12, or a generative artificial intelligence system 1500), and illustrates interface screens related to the voice assistant function. Hereinafter, descriptions overlapping with those of FIGS. 4 and 5 will be omitted or briefly described.

According to an embodiment, the user terminal may provide a query 611 and input data 613 associated with the user utterance to a previously selected LLM (e.g., the first LLM) based on information corresponding to the user utterance. The user terminal may determine a processing level required to process the user utterance and identify one LLM from among a plurality of LLMs based on the determined processing level. For example, the user terminal may determine the processing level based on information 611 corresponding to the user utterance and/or information related to the input data 613 (e.g., a size of the input data or a type of the input data (e.g., text, image, audio, video, and/or a combination thereof)). The user terminal may identify an LLM corresponding to the processing level (e.g., a second LLM).

For example, when the user terminal determines that the user utterance is not processable by using the previously selected first LLM, the user terminal may prompt (615) the user to change the LLM. For example, when the user terminal determines that an LLM having higher performance (e.g., a larger size) is required based on an intent included in the user utterance, the user terminal may prompt (615) the user to change the LLM.

For example, when a user input 617 agreeing to change the LLM is received from the user, the electronic device may change the LLM used to process the user utterance from the first LLM to the second LLM. The electronic device may provide information 631 indicating that the user utterance is being processed by using the second LLM and/or a result of processing the user utterance by using the second LLM (e.g., an answer (response) 633 to the second user utterance).

Although FIG. 6 illustrates that the user terminal performs all operations of receiving user utterances, selecting an LLM based on the user utterances, and processing the user utterances by using the selected LLM, at least some operations may be performed in association with an external server (e.g., the electronic device 100 of FIG. 1, the electronic device 200 of FIG. 2, an electronic device 1101 of FIG. 11, or a user terminal 1201 or an intelligent server 1300 of FIG. 12). For example, the user terminal may transmit information corresponding to the user utterance to the external server, the external server may select an LLM suitable for the user utterance and process the user utterance by using the selected LLM, and the user terminal may receive a result of processing the user utterance from the external server and provide the result to the user.

The user terminal (and/or an external server) according to an embodiment may dynamically select, from among a plurality of LLMs, an LLM suitable for processing the user utterance, or change the LLM to the suitable LLM, based at least in part on the user utterance, thereby improving a processing speed, processing performance, and/or accuracy of the user utterance.

For example, when the user directly selects a language model to process the user utterance, a response to the user utterance (e.g., the result of processing the user utterance) may vary depending on the language model selected by the user. For example, when the language model selected by the user has insufficient performance to process the user utterance, or when an appropriate language model is not selected according to the user utterance, accuracy of the result of processing the utterance may decrease, and the user may fail to obtain desired information.

The electronic device according to an embodiment may include a communication circuit, a large language model (LLM) database including a plurality of LLMs and a memory storing instructions, and at least one processor.

According to an embodiment, the instructions, when executed by the at least one processor, may cause the electronic device to receive information corresponding to at least one user utterance from an external electronic device.

According to an embodiment, the instructions, when executed by the at least one processor, may cause the electronic device to identify at least one intent included in the at least one user utterance and the number of intents included in the at least one user utterance.

According to an embodiment, the instructions, when executed by the at least one processor, may cause the electronic device to determine a processing level (processing difficulty, processing grade, complexity) required to process the at least one user utterance based at least in part on the at least one intent and the number of intents.

According to an embodiment, the instructions, when executed by the at least one processor, may cause the electronic device to select a first LLM having performance corresponding to the determined processing level from among the plurality of LLMs.

According to an embodiment, the instructions, when executed by the at least one processor, may cause the electronic device to process the at least one user utterance using the first LLM.

According to an embodiment, the electronic device may determine the processing level required to process the user utterance and select, from among a plurality of LLMs, an LLM having performance suitable for processing the user utterance based on the processing level, thereby increasing accuracy of utterance processing, optimizing a service cost, and increasing efficiency of utterance processing. For example, the electronic device may increase accuracy and quality of a response to the utterance and optimize resources and costs consumed for utterance processing by selecting an LLM having a scale corresponding to complexity of the user utterance based on the complexity of the user utterance and processing the utterance.

According to an embodiment, the instructions, when executed by the at least one processor, may cause the electronic device to receive context information associated with the external electronic device from the external electronic device.

According to an embodiment, the instructions, when executed by the at least one processor, may cause the electronic device to determine the processing level based at least in part on the context information.

According to an embodiment, the electronic device may determine a processing level required to process the user utterance based on context information associated with a user and/or an external electronic device of the user and determine the LLM suitable for processing the user utterance from among the plurality of LLMs.

According to an embodiment, the instructions, when executed by the at least one processor, may cause the electronic device to obtain input data associated with the at least one user utterance.

According to an embodiment, the instructions, when executed by the at least one processor, may cause the electronic device to determine the processing level based at least in part on a type of the input data.

According to an embodiment, the type of the input data may include at least one of text, an image, a video, or a combination thereof.

According to an embodiment, the electronic device may determine the processing level required to process the user utterance based on the type of the input data and determine the LLM suitable for processing the user utterance from among the plurality of LLMs.

According to an embodiment, the instructions, when executed by the at least one processor, may cause the electronic device to predict, using a trained artificial intelligence model, at least one of the number of processing steps, a processing time, a processing speed, a computational amount, or a combination thereof required to process the at least one user utterance by using at least one LLM among the plurality of LLMs.

According to an embodiment, the instructions, when executed by the at least one processor, may cause the electronic device to determine the processing level based at least in part on the prediction result.

According to an embodiment, the electronic device may determine the processing level required to process the user utterance based on the trained artificial intelligence model, thereby determining the LLM suitable for processing the user utterance without additional input from the user.

According to an embodiment, the instructions, when executed by the at least one processor, may cause the electronic device to store a processing history of the at least one user utterance processed using the first LLM.

According to an embodiment, the instructions, when executed by the at least one processor, may cause the electronic device to train and/or update the artificial intelligence model used to determine the processing level based on the processing history.

According to an embodiment, the plurality of LLMs may be classified into a plurality of designated categories and stored in the LLM database.

According to an embodiment, the instructions, when executed by the at least one processor, may cause the electronic device to select at least one category from among the plurality of categories based on the at least one intent.

According to an embodiment, the instructions, when executed by the at least one processor, may cause the electronic device to select the first LLM from among LLMs belonging to the selected at least one category based on the number of intents.

According to an embodiment, the electronic device may select an LLM of a category suitable for processing the user utterance based on an intent of the user utterance.

According to an embodiment, the instructions, when executed by the at least one processor, may cause the electronic device to select the first LLM based on a result of comparing the processing level with a preset threshold.

According to an embodiment, the instructions, when executed by the at least one processor, may cause the electronic device to select, from among the plurality of LLMs, a second LLM corresponding to a processing state based on recognizing that the processing state of the at least one user utterance does not correspond to the determined processing level during processing of the at least one user utterance using the first LLM.

According to an embodiment, the instructions, when executed by the at least one processor, may cause the electronic device to process the at least one user utterance by using the second LLM.

According to an embodiment, the electronic device may increase accuracy and quality of the result of processing the user utterance (the response to the user utterance) by dynamically selecting and/or changing an LLM suitable for processing the user utterance during processing of the user utterance.

According to an embodiment, the instructions, when executed by the at least one processor, may cause the electronic device to generate summary information summarizing processing details of the at least one user utterance by using the first LLM.

According to an embodiment, the instructions, when executed by the at least one processor, may cause the electronic device to provide the summary information to the second LLM.

According to an embodiment, the instructions, when executed by the at least one processor, may cause the electronic device to process the at least one user utterance based on the summary information using the second LLM.

According to an embodiment, when the LLM used for processing the user utterance is changed, the electronic device may generate the summary information rather than the full utterance processing content and provide the summary information to a changed LLM, thereby efficiently managing information and/or data (e.g., increasing token efficiency related to the LLM) and efficiently performing operations for processing the user utterance using the LLM. For example, the electronic device may increase efficiency of processing the utterance using the LLM by reducing the amount of resources and/or data required to process the utterance by using the LLM.

According to an embodiment, the instructions, when executed by the at least one processor, may cause the electronic device to receive, from the external electronic device, a user setting value related to LLM selection criteria.

According to an embodiment, the instructions, when executed by the at least one processor, may cause the electronic device to select the first LLM based at least in part on the user setting value.

According to an embodiment, the electronic device may select an LLM based on the user setting value, so that an LLM having performance and/or a category preferred by the user may be selected from among the plurality of LLMs and a customized utterance processing service may be provided to the user.

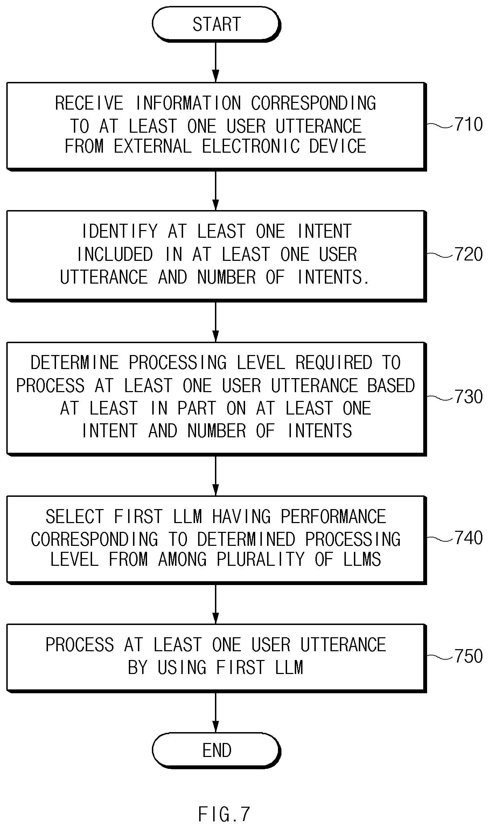

FIG. 7 is a flowchart illustrating a method for processing an utterance by an electronic device according to an embodiment.

According to an embodiment, in operation 710, an electronic device (e.g., the electronic device 100 of FIG. 1, the electronic device 200 of FIG. 2, an electronic device 1101 of FIG. 11, a user terminal 1201 or an intelligent server 1300 of FIG. 12, or a generative artificial intelligence system 1500) may receive information corresponding to at least one user utterance from an external electronic device (e.g., the external device 201 of FIG. 2, electronic devices 1102 and 1104 of FIG. 11, or a user terminal 1201 of FIG. 12). For example, the external electronic device may receive the user utterance through a microphone of the external electronic device and transmit information corresponding to the received user utterance to the electronic device. According to an embodiment, when the electronic device includes a microphone, the electronic device may receive the user utterance through the microphone of the electronic device. In this case, the electronic device may obtain the information corresponding to the user utterance from the received user utterance.

According to an embodiment, in operation 720, the electronic device may identify at least one intent included in the at least one user utterance and a number of intents. For example, the user utterance may include at least one intent. For example, the at least one user utterance may include one user utterance, a plurality of consecutive user utterances, and/or a plurality of related user utterances received with a predetermined time interval.

According to an embodiment, in operation 730, the electronic device may determine a processing level required to process the at least one user utterance based at least in part on the at least one intent and the number of intents. For example, the electronic device may determine complexity of the user utterance based on the at least one intent and/or the number of intents. For example, the complexity of the user utterance may be related to the number of processing steps required to process the user utterance. For example, the processing level may be determined based on at least one of the number of processing steps required to process the user utterance, a processing speed, an amount of data capable of being processed, a computational amount, a type of input data, an inference capability of learning, the number of plug-ins available to the LLM, context information associated with the external electronic device, and/or a combination thereof.

According to an embodiment, the electronic device may receive the context information associated with the external electronic device from the external electronic device. The electronic device may determine the processing level based at least in part on the context information. For example, the context information may include a user profile, the number of available plug-ins, personal information stored in the external electronic device (e.g., schedule information), and/or information related to a state of the external electronic device.

According to an embodiment, the electronic device may obtain input data associated with at least one user utterance. The electronic device may determine the processing level based at least in part on the type of the input data. For example, the input data may include data provided to the LLM (e.g., a document file, an image file, an audio file, a video file, and/or a combination thereof). For example, the electronic device may determine the processing level based at least in part on whether the type of the input data is text, audio, an image, a video, and/or a combination thereof.

According to an embodiment, the electronic device may predict at least one of a number of processing steps, a processing time, a processing speed, a computational amount, or a combination thereof required to process the at least one user utterance by using a trained artificial intelligence model. The electronic device may determine the processing level based at least in part on a prediction result. For example, the artificial intelligence model may be trained using at least one of at least one language model, a deep learning model, an artificial neural network, a deep neural network, and/or a combination thereof. For example, the artificial intelligence model may be trained based on preprocessed user utterances, processing histories of the user utterances, and/or summary information regarding operations of processing the user utterances.

According to an embodiment, the electronic device may receive a user setting value related to LLM selection criteria from an external electronic device (e.g., a device that has received the user utterance). For example, the user setting value may be set based on a user input received through an interface provided by the external electronic device. For example, the LLM selection criteria may include performance of the LLM (e.g., a maximum capacity of the LLM, a size, a processing speed, the number of parameters, the number of supported plug-ins, and/or a specialized field) and/or whether an automatic change function of the LLM is activated. The electronic device may select a first LLM from among the plurality of LLMs based at least in part on the user setting value.

According to an embodiment, in operation 740, the electronic device may select a first LLM having performance corresponding to the determined processing level from among a plurality of LLMs. For example, the electronic device may include an LLM database including a plurality of LLMs. According to an embodiment, the LLM database may be located outside the electronic device. For example, at least some of the plurality of LLMs may be stored in the electronic device (e.g., in the LLM database of the electronic device), and the remaining ones may be stored outside the electronic device (e.g., in an external electronic device and/or an LLM database outside the electronic device).

According to an embodiment, the electronic device may select at least one category from among categories of the plurality of LLMs based on at least one intent included in the user utterance. The electronic device may select the first LLM from among LLMs belonging to the at least one selected category based on the number of intents included in the user utterance.

According to an embodiment, the electronic device may select the first LLM based on a result of comparing the processing level determined in operation 730 with a preset threshold. For example, one or more thresholds may be preset. The threshold may be set to divide the processing level into a plurality of ranges. For example, each of the plurality of ranges may correspond to performance of the LLM. For example, the electronic device may select one of LLMs having performance corresponding to the processing level from among the plurality of LLMs based on a result of comparing the processing level with the threshold.

According to an embodiment, in operation 750, the electronic device may process the at least one user utterance using the first LLM. For example, the electronic device may query the first LLM with the user utterance. For example, the electronic device may provide the first LLM with a prompt corresponding to the user utterance and obtain a response to the prompt from the first LLM.

According to an embodiment, the electronic device may store a processing history of the at least one user utterance processed by using the first LLM. The electronic device may train or update an artificial intelligence model used to determine the processing level based on the processing history.

According to an embodiment of the present disclosure, even without a user input for manually selecting an LLM, the electronic device may select an LLM having a function suitable for processing the user utterance from among a plurality of LLMs based on the user utterance, the user setting value, the context information related to the electronic device and/or the external electronic device, and/or the type of input data to be provided to the LLM, and process the user utterance by using the selected LLM, thereby improving processing performance of the user utterance and/or accuracy and reliability of a processing result and increasing user convenience.

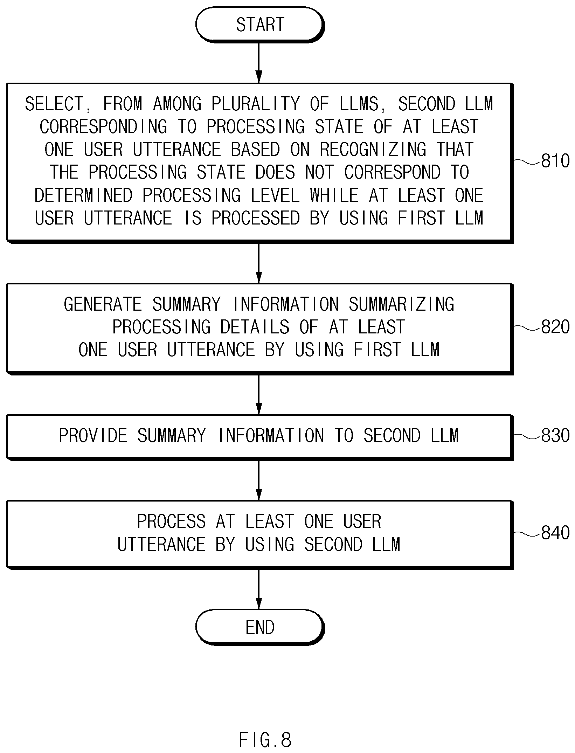

According to various embodiments, at least some of operations described with reference to FIG. 7 may be simultaneously performed, or an order of operations may be changed. According to various embodiments, at least some of operations described with reference to FIG. 7 may be omitted, or at least some operations (e.g., at least some of operations of FIGS. 8 to 10) may be added. For example, operations of FIG. 7 may be performed as embodiments separate from operations of FIGS. 8 to 10, or may be performed as embodiments in conjunction therewith.

FIG. 8 is a flowchart illustrating a method for processing an utterance by an electronic device according to an embodiment. For example, operations of FIG. 8 may be performed after operation 750 of FIG. 7.

According to an embodiment, in operation 810, an electronic device (e.g., the electronic device 100 of FIG. 1, the electronic device 200 of FIG. 2, an electronic device 1101 of FIG. 11, a user terminal 1201 or an intelligent server 1300 of FIG. 12, or a generative artificial intelligence system 1500) may select, from among a plurality of large language models (LLMs), a second LLM corresponding to a processing state of at least one user utterance based on recognizing that the processing state does not correspond to a determined processing level during processing of the at least one user utterance using a first LLM. For example, the electronic device may recognize that a current processing state of the user utterance (e.g., the number of processing steps, a type of input data, a processing speed, context information associated with the external electronic device, an intent of the user utterance, and/or the number of intents included in the user utterance) does not correspond to the determined processing level. For example, the electronic device may recognize a case in which a new user utterance is additionally input (an intent included in the user utterance may be changed or added, or the number of intents may be changed according to the additional user utterance), a case in which a processing step exceeds a previously predicted processing level while processing the user utterance, a case in which more input data is required or provided, and a case in which an LLM having higher performance or an LLM having different performance is required in order to process the user utterance (or in order to increase accuracy of a processing result of the user utterance). For example, when the processing state of the user utterance does not correspond to the determined processing level, the electronic device may select the second LLM more suitable for the processing state of the user utterance. The electronic device may change the LLM used for processing the user utterance from the first LLM to the second LLM.

According to an embodiment, in operation 820, the electronic device may generate summary information summarizing processing details of at least one user utterance using the first LLM. For example, the electronic device may generate the summary information by extracting at least some of information corresponding to each processing step of processing the user utterance. For example, the summary information may include at least some of information corresponding to the user utterance and/or information obtained by using the first LLM. The summary information may include a smaller number of tokens than the number of tokens included in information input to the first LLM and/or information obtained from (output from) the first LLM. For example, the electronic device may tokenize and manage information input to the first LLM and/or information obtained from (output from) the first LLM. For example, the electronic device may generate the summary information including some of tokens obtained from information input to the LLM and/or information obtained from (output from) the first LLM.

According to an embodiment, in operation 830, the electronic device may provide the summary information to the second LLM. For example, the electronic device may provide the summary information to the second LLM as an input (e.g., a prompt for the second LLM).

According to an embodiment, in operation 840, the electronic device may process the at least one user utterance using the second LLM. For example, the electronic device may generate a prompt related to an intent included in the user utterance based on information corresponding to the at least one user utterance and provide the prompt to the second LLM. The electronic device may obtain a response to the prompt from the second LLM.

According to an embodiment of the present disclosure, while the user utterance is processed, the electronic device may dynamically change the LLM used for the user utterance to an LLM having a function suitable for processing the user utterance from among a plurality of LLMs, and process the user utterance by using the changed LLM, thereby improving a processing speed of the user utterance and/or accuracy and reliability of a processing result and increasing user convenience.

According to various embodiments, at least some of operations described with reference to FIG. 8 may be simultaneously performed, or an order of operations may be changed. According to various embodiments, at least some of operations described with reference to FIG. 8 may be omitted, or at least some operations (e.g., at least some of operations of FIGS. 7, 9, and 10) may be added. For example, operations of FIG. 8 may be performed as embodiments separate from operations of FIGS. 7, 9, and 10, or may be performed as embodiments in conjunction therewith.

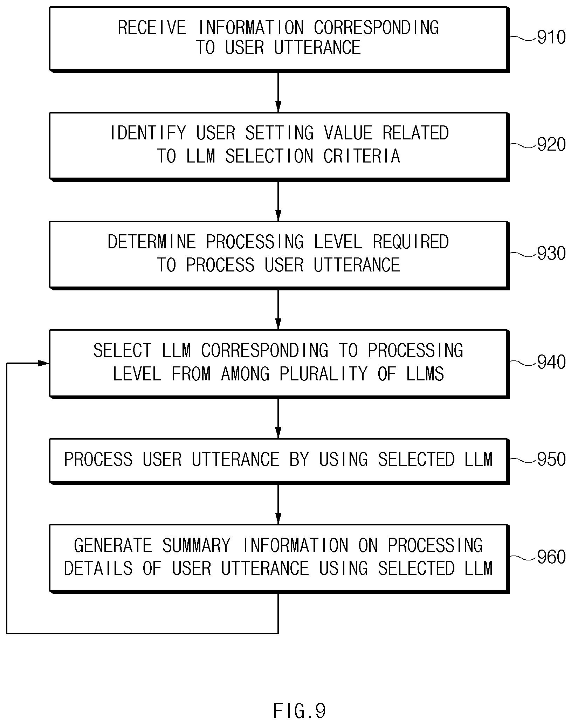

FIG. 9 is a flowchart illustrating a method for processing an utterance by an electronic device according to an embodiment. Hereinafter, operations identical or similar to those described with reference to FIGS. 7 and 8 will be omitted or briefly described.

According to an embodiment, in operation 910, an electronic device (e.g., the electronic device 100 of FIG. 1, the electronic device 200 of FIG. 2, an electronic device 1101 of FIG. 11, a user terminal 1201 or an intelligent server 1300 of FIG. 12, or a generative artificial intelligence system 1500) may receive information corresponding to a user utterance from an external electronic device (e.g., the external device 201 of FIG. 2, electronic devices 1102 and 1104 of FIG. 11, or a user terminal 1201 of FIG. 12). For example, the information corresponding to the user utterance may include voice information corresponding to the user utterance and/or text information corresponding to the user utterance.

According to an embodiment, in operation 920, the electronic device may identify a user setting value related to LLM selection criteria. For example, the user setting value may be set based on a user input by the external electronic device. For example, the external electronic device may set the user setting value related to the LLM selection criteria through interfaces illustrated in FIGS. 3A to 3C. For example, the LLM selection criteria may include a maximum capacity of the LLM, a size of the LLM, whether an automatic change (or selection) function of the LLM is activated, and/or a category of the LLM. For example, the electronic device may receive, from the external electronic device, the user setting value related to the LLM selection criteria set by the user.

According to an embodiment, in operation 930, the electronic device may determine a processing level required to process the user utterance. For example, the processing level may include complexity of the user utterance. For example, the complexity of the user utterance may include a number of processing steps required to process the user utterance by using the LLM. According to an embodiment, the electronic device may determine the processing level based on at least one intent included in the user utterance and/or a number of intents included in the user utterance. For example, the electronic device may determine the processing level based on a result of comparing the number of user intents included in the user utterance with a preset threshold. According to an embodiment, the electronic device may determine the processing level by using a trained artificial intelligence model. The artificial intelligence model may be trained and/or updated based on information corresponding to the user utterance, a processing history of the user utterance, and/or summary information. According to an embodiment, the electronic device may determine the processing level based at least in part on context information related to the external electronic device (for example, an electronic device receiving the user utterance) (e.g., a user profile, a number of available plugins, personal information stored in the external electronic device (e.g., schedule information), and/or information related to a state of the external electronic device). According to an embodiment, when input data associated with the user utterance (e.g., input data to be provided to the LLM) is present, the electronic device may determine the processing level based at least in part on a type of the input data (e.g., text, audio, video, and/or a combination thereof).

According to an embodiment, in operation 940, the electronic device may select an LLM corresponding to the processing level from among a plurality of LLMs. For example, the electronic device may select an LLM having performance (e.g., a learning inference capability, a processing speed, an amount of processable data, an image processing capability, a size, a capacity, and/or a category) corresponding to the user setting value and the processing level from an LLM database including the plurality of LLMs. For example, when there is no LLM having performance corresponding to the processing level in the LLM database, the electronic device may select an LLM closest to the user setting value and/or the processing level from among the plurality of LLMs. For example, the electronic device may determine a category of the LLM based on an intent included in the user utterance and select one LLM from among LLMs belonging to the determined category based on the processing level (e.g., a number of processing steps or a number of intents included in the user utterance).

According to an embodiment, when a current processing state of the user utterance does not correspond to the determined processing level during processing of the user utterance in operation 940, the electronic device may select an LLM having performance corresponding to the processing state. For example, when the processing state does not correspond to the processing level, the electronic device may change an LLM corresponding to a previously selected processing level to an LLM corresponding to the processing state.

According to an embodiment, in operation 950, the electronic device may process the user utterance by using the selected LLM. For example, the electronic device may provide a prompt to the selected LLM based on the information corresponding to the user utterance. The electronic device may obtain a response to the prompt from the selected LLM.

According to an embodiment, in operation 960, the electronic device may generate summary information on processing details of the user utterance using the selected LLM. For example, the electronic device may generate summary information related to a series of operations or processing steps for processing the user utterance by using the selected LLM. The summary information may include at least some of information input to the selected LLM and information obtained from the selected LLM. For example, the summary information may include at least some tokens included in the information input to the selected LLM and the information obtained from the selected LLM.

According to an embodiment, when the LLM is changed, the electronic device may provide the summary information to the changed LLM. For example, the electronic device may efficiently manage tokens related to the user utterance by providing, to the changed LLM, the summary information on processing details of the user utterance using the LLM prior to the change.

According to an embodiment of the present disclosure, by dynamically selecting or changing an LLM having a function suitable for processing the user utterance from among the plurality of LLMs, it is possible to improve accuracy and reliability of a processing result of the user utterance using the LLM and to increase user convenience, and by summarizing, managing, and utilizing processing details of the user utterance, it is possible to increase efficiency of processing the user utterance (e.g., token efficiency).

According to various embodiments, at least some of operations described with reference to FIG. 9 may be simultaneously performed, or an order of operations may be changed. According to various embodiments, at least some of operations described with reference to FIG. 9 may be omitted, or at least some operations (e.g., at least some of operations of FIGS. 7, 8, and 10) may be added. For example, operations of FIG. 9 may be performed as embodiments separate from operations of FIGS. 7, 8 and 10, or may be performed as embodiments in conjunction therewith.

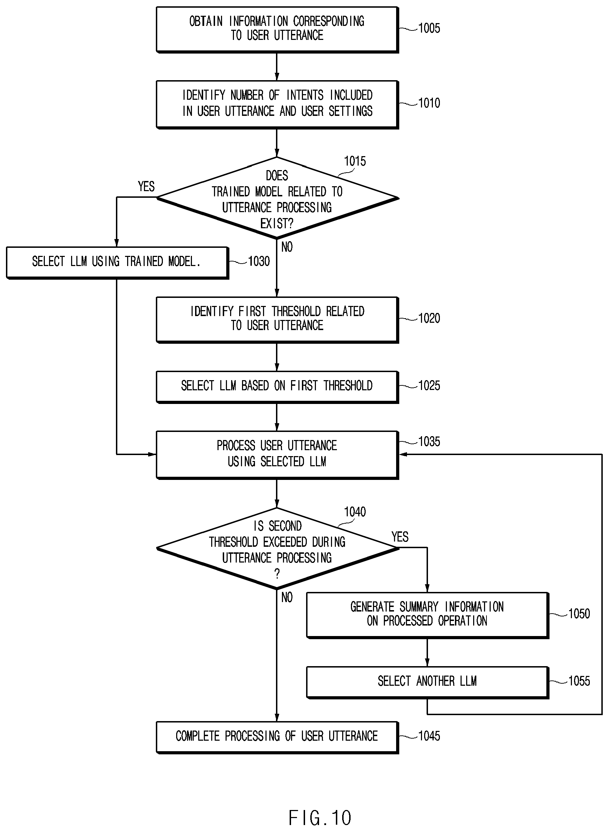

FIG. 10 is a flowchart illustrating a method for processing an utterance by an electronic device according to an embodiment. Hereinafter, operations identical or similar to those described with reference to FIGS. 7 to 9 will be omitted or briefly described.

According to an embodiment, in operation 1005, an electronic device (e.g., the electronic device 100 of FIG. 1, the electronic device 200 of FIG. 2, an electronic device 1101 of FIG. 11, a user terminal 1201 or an intelligent server 1300 of FIG. 12, or a generative artificial intelligence system 1500) may obtain information corresponding to a user utterance. For example, the information corresponding to the user utterance may include voice information corresponding to the user utterance and/or text information corresponding to the user utterance.

According to an embodiment, in operation 1010, the electronic device may identify the number of intents included in the user utterance and user settings. For example, the user utterance may include at least one intent. For example, the electronic device may receive, from an external electronic device, a user setting value related to LLM selection criteria.

According to an embodiment, in operation 1015, the electronic device may determine whether a trained model related to utterance processing exists. For example, the trained model may be used to determine a processing level required to process the user utterance. For example, the trained model may be implemented based on at least one of a language model, a deep learning model, an artificial neural network, a deep neural network, prompt engineering, or a combination thereof.

For example, when the trained model exists, the electronic device may perform operation 1030, and when the trained model does not exist, the electronic device may perform operation 1020.

According to an embodiment, in operation 1020, the electronic device may identify a first threshold related to the user utterance. For example, the electronic device may compare the number of intents included in the user utterance with a preset first threshold. For example, one or more thresholds may be preset. For example, when there are a plurality of first thresholds, the electronic device may identify a range within which the number of intents included in the user utterance falls, among ranges defined by a plurality of first thresholds. For example, when the first thresholds are 2 and 4, the electronic device may determine whether the number of intents is less than 2, whether the number of intents is equal to or greater than 2 and less than 4, or whether the number of intents is equal to or greater than 4.

According to an embodiment, in operation 1025, the electronic device may select an LLM based on the first threshold. For example, the electronic device may select a corresponding LLM based on a result of comparing the number of intents included in the user utterance with the first thresholds. For example, it is assumed that the first thresholds are 2 and 4. When the number of intents included in the user utterance is less than 2, the electronic device may select a first LLM having relatively low performance (e.g., a relatively small size) from among a plurality of LLMs. When the number of intents included in the user utterance is equal to or greater than 2 and less than 4, the electronic device may select a second LLM having relatively medium performance (e.g., a relatively medium size) from among the plurality of LLMs. When the number of intents included in the user utterance is equal to or greater than 4, the electronic device may select a third LLM having relatively high performance (e.g., a relatively large size) from among the plurality of LLMs.

According to an embodiment, in operation 1030, the electronic device may select the LLM using the trained model. According to an embodiment, the electronic device may determine the processing level required to process the user utterance based on the trained model. For example, the electronic device may predict the number of processing steps required to process the user utterance based on the trained model (hereinafter, the number of processing steps may be referred to as "utterance complexity"). For example, the electronic device may select, from among the plurality of LLMs, an LLM having performance corresponding to the number of processing steps. For example, the electronic device may identify preset selection criteria corresponding to the number of processing steps (e.g., at least one threshold related to the number of processing steps). For example, it is assumed that the thresholds related to the number of processing steps are 3 and 5. The electronic device may select an LLM having relatively low performance (e.g., a relatively small size) from among the plurality of LLMs when the number of processing steps is less than 3, may select an LLM having relatively high performance (e.g., a relatively large size) when the number of processing steps is equal to or greater than 5, and may select an LLM having relatively medium performance (e.g., a relatively medium size) when the number of processing steps is equal to or greater than 3 and less than 5. Although the foregoing description assumes that the processing level is determined based on the number of utterance processing steps, the present disclosure is not limited thereto, and according to various embodiments, the processing level may be determined based on at least one of a processing speed, an amount of processable data, a computational amount, a type of input data, a learning inference capability, the number of plug-ins usable by the LLM, context information associated with an external electronic device, and/or a combination thereof, in addition to the number of processing steps.

According to an embodiment, in operation 1035, the electronic device may process the user utterance using the selected LLM. For example, the electronic device may provide a prompt corresponding to the user utterance to the selected LLM. The electronic device may provide input data to the selected LLM together with the user utterance. The electronic device may obtain a response to the prompt from the selected LLM. According to an embodiment, when summary information generated before using the selected LLM exists (e.g., summary information on an operation of processing the user utterance using another LLM), the electronic device may process the user utterance using the selected LLM based at least in part on the summary information. For example, the electronic device may provide the summary information to the selected LLM as an input (or a prompt).

According to an embodiment, in operation 1040, the electronic device may determine whether a processing state of the user utterance exceeds a second threshold during processing of the utterance. For example, the electronic device may determine whether the processing state of the user utterance exceeds the second threshold related to a user utterance processing level (e.g., the number of processing steps) during processing of the utterance. For example, the second threshold may be related to the processing state of the user utterance and may be a preset value corresponding to the selected LLM. For example, when the electronic device predicts the number of processing steps of the user utterance and selects the LLM based on the predicted number of processing steps, an upper limit of the number of processing steps corresponding to the selected LLM may be set as the second threshold. For example, when the electronic device predicts that the number of processing steps is less than 3 and selects the first LLM corresponding to the predicted number of processing steps, the second threshold may be 3. When the electronic device predicts that the number of processing steps is equal to or greater than 3 and less than 5 and selects the second LLM corresponding to the predicted number of processing steps, the second threshold may be 5.

For example, when the electronic device has selected and is using an LLM having the relatively highest performance, operation 1040 may be omitted and operation 1045 may be performed. For example, when the threshold is exceeded, the electronic device may perform operation 1050, and when the threshold is less than the second threshold, the electronic device may perform operation 1045.

Although a case in which the processing state of the utterance exceeds the second threshold has been described above, the present disclosure is not limited thereto. For example, the second threshold may include a lower-limit value rather than an upper limit corresponding to the selected LLM, and in this case, the electronic device may determine whether the processing state becomes equal to or less than the second threshold, and when the processing state becomes equal to or less than the second threshold, the electronic device may perform operation 1050.

According to an embodiment, in operation 1045, the electronic device may complete processing of the user utterance. For example, the electronic device may obtain a response to the user utterance through the selected LLM and provide the obtained response to a user (e.g., an external electronic device that has received the user utterance).

According to an embodiment, in operation 1050, the electronic device may generate summary information on the processed operation. For example, the electronic device may generate the summary information summarizing operations of processing the user utterance (e.g., information corresponding to the user utterance and/or a response obtained from the LLM). For example, the summary information may include a smaller number of tokens than tokens included in information input to the LLM and/or information obtained from the LLM.

According to an embodiment, in operation 1055, the electronic device may select another LLM. For example, the electronic device may select another LLM corresponding to the current processing state of the user utterance determined in operation 1035. For example, when the electronic device determines that an LLM having higher performance is required to process the user utterance, the electronic device may select the LLM having higher performance. For example, when the electronic device determines that the user utterance is sufficiently processable even with an LLM having lower performance, the electronic device may select the LLM having lower performance. For example, when the electronic device determines that an LLM having different performance (e.g., an LLM of another category) is more suitable for processing the user utterance, the electronic device may select the LLM having different performance. According to an embodiment, the electronic device may provide the summary information to the selected other LLM as an input.

According to an embodiment of the present disclosure, by dynamically selecting or changing an LLM having a function suitable for processing the user utterance from among the plurality of LLMs, it is possible to improve accuracy and reliability of a processing result of the user utterance using the LLM and to increase user convenience, and by summarizing, managing, and utilizing processing details of the user utterance, it is possible to increase efficiency of processing the user utterance (e.g., token efficiency).

According to various embodiments, at least some of operations described with reference to FIG. 10 may be simultaneously performed, or an order of operations may be changed. According to various embodiments, at least some of operations described with reference to FIG. 10 may be omitted, or at least some operations (e.g., at least some of operations of FIGS. 7 to 9) may be added. For example, operations of FIG. 10 may be performed as embodiments separate from operations of FIGS. 7 to 9, or may be performed as embodiments in conjunction therewith.

A method for processing an utterance by an electronic device according to an embodiment may include receiving information corresponding to at least one user utterance from an external electronic device.

According to an embodiment, the method may include identifying at least one intent included in the at least one user utterance and the number of intents included in the at least one user utterance.

According to an embodiment, the method may include determining a processing level required to process the at least one user utterance based at least in part on the at least one intent and the number of intents.

According to an embodiment, the method may include selecting a first LLM having performance corresponding to the determined processing level from among a plurality of LLMs included in an LLM database.

According to an embodiment, the method may include processing the at least one user utterance using the first LLM.

According to an embodiment, the determining of the processing level may include receiving context information associated with the external electronic device from the external electronic device.

According to an embodiment, the determining of the processing level may include determining the processing level based at least in part on the context information.

According to an embodiment, the determining of the processing level may include obtaining input data associated with the at least one user utterance.

According to an embodiment, the determining of the processing level may include determining the processing level based at least in part on a type of the input data.

According to an embodiment, the type of input data may include at least one of text, an image, a video, or a combination thereof.

According to an embodiment, the determining of the processing level may include predicting at least one of the number of processing steps, a processing time, a processing speed, an amount of computation, or a combination thereof required to process the at least one user utterance using at least one LLM among the plurality of LLMs, using a trained artificial intelligence (AI) model.

According to an embodiment, the determining of the processing level may include determining the processing level based at least in part on a result of the prediction.

According to an embodiment, the method may include storing a processing history of the at least one user utterance processed using the first LLM.

According to an embodiment, the method may include training or updating an artificial intelligence model used for determining the processing level based on the processing history.

According to an embodiment, the plurality of LLMs may be classified into a plurality of designated categories and stored in the LLM database.

According to an embodiment, the selecting of the first LLM may include selecting at least one category from among the plurality of categories based on the at least one intent.

According to an embodiment, the selecting of the first LLM may include selecting the first LLM from among LLMs belonging to the selected at least one category based on the number of intents.

According to an embodiment, the selecting of the first LLM may include selecting the first LLM based on a result of comparing the processing level with a preset threshold.

According to an embodiment, the method may include selecting a second LLM corresponding to a processing state from among the plurality of LLMs based on recognizing that the processing state of the at least one user utterance does not correspond to the determined processing level, during processing of the at least one user utterance using the first LLM.

According to an embodiment, the method may include processing the at least one user utterance using the second LLM.

According to an embodiment, the method may include generating summary information summarizing processing details of the at least one user utterance using the first LLM.

According to an embodiment, the method may include providing the summary information to the second LLM.

According to an embodiment, the processing of the at least one user utterance using the second LLM may include processing the at least one user utterance based on the summary information using the second LLM.

According to an embodiment, the method may include receiving a user setting value related to LLM selection criteria from the external electronic device.

According to an embodiment, the method may include selecting the first LLM based at least in part on the user setting value.

FIG. 11 is a block diagram illustrating an electronic device 1101 in a network environment 1100 according to various embodiments. Referring to FIG. 11, the electronic device 1101 in the network environment 1100 may communicate with an electronic device 1102 via a first network 1198 (e.g., a short-range wireless communication network), or at least one of an electronic device 1104 or a server 1108 via a second network 1199 (e.g., a long-range wireless communication network). According to an embodiment, the electronic device 1101 may communicate with the electronic device 1104 via the server 1108. According to an embodiment, the electronic device 1101 may include a processor 1120, memory 1130, an input module 1150, a sound output module 1155, a display module 1160, an audio module 1170, a sensor module 1176, an interface 1177, a connecting terminal 1178, a haptic module 1179, a camera module 1180, a power management module 1188, a battery 1189, a communication module 1190, a subscriber identification module(SIM) 1196, or an antenna module 1197. In some embodiments, at least one of the components (e.g., the connecting terminal 1178) may be omitted from the electronic device 1101, or one or more other components may be added in the electronic device 1101. In some embodiments, some of the components (e.g., the sensor module 1176, the camera module 1180, or the antenna module 1197) may be implemented as a single component (e.g., the display module 1160).

The processor 1120 may execute, for example, software (e.g., a program 1140) to control at least one other component (e.g., a hardware or software component) of the electronic device 1101 coupled with the processor 1120, and may perform various data processing or computation. According to one embodiment, as at least part of the data processing or computation, the processor 1120 may store a command or data received from another component (e.g., the sensor module 1176 or the communication module 1190) in volatile memory 1132, process the command or the data stored in the volatile memory 1132, and store resulting data in non-volatile memory 1134. According to an embodiment, the processor 1120 may include a main processor 1121 (e.g., a central processing unit (CPU) or an application processor (AP)), or an auxiliary processor 1123 (e.g., a graphics processing unit (GPU), a neural processing unit (NPU), an image signal processor (ISP), a sensor hub processor, or a communication processor (CP)) that is operable independently from, or in conjunction with, the main processor 1121. For example, when the electronic device 1101 includes the main processor 1121 and the auxiliary processor 1123, the auxiliary processor 1123 may be adapted to consume less power than the main processor 1121, or to be specific to a specified function. The auxiliary processor 1123 may be implemented as separate from, or as part of the main processor 1121.

The auxiliary processor 1123 may control at least some of functions or states related to at least one component (e.g., the display module 1160, the sensor module 1176, or the communication module 1190) among the components of the electronic device 1101, instead of the main processor 1121 while the main processor 1121 is in an inactive (e.g., sleep) state, or together with the main processor 1121 while the main processor 1121 is in an active state (e.g., executing an application). According to an embodiment, the auxiliary processor 1123 (e.g., an image signal processor or a communication processor) may be implemented as part of another component (e.g., the camera module 1180 or the communication module 1190) functionally related to the auxiliary processor 1123. According to an embodiment, the auxiliary processor 1123 (e.g., the neural processing unit) may include a hardware structure specified for artificial intelligence model processing. An artificial intelligence model may be generated by machine learning. Such learning may be performed, e.g., by the electronic device 1101 where the artificial intelligence is performed or via a separate server (e.g., the server 1108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1130 may store various data used by at least one component (e.g., the processor 1120 or the sensor module 1176) of the electronic device 1101. The various data may include, for example, software (e.g., the program 1140) and input data or output data for a command related thereto. The memory 1130 may include the volatile memory 1132 or the non-volatile memory 1134.

The program 1140 may be stored in the memory 1130 as software, and may include, for example, an operating system (OS) 1142, middleware 1144, or an application 1146.

The input module 1150 may receive a command or data to be used by another component (e.g., the processor 1120) of the electronic device 1101, from the outside (e.g., a user) of the electronic device 1101. The input module 1150 may include, for example, a microphone, a mouse, a keyboard, a key (e.g., a button), or a digital pen (e.g., a stylus pen).

The sound output module 1155 may output sound signals to the outside of the electronic device 1101. The sound output module 1155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1160 may visually provide information to the outside (e.g., a user) of the electronic device 1101. The display module 1160 may include, for example, a display, a hologram device, or a projector and control circuitry to control a corresponding one of the display, hologram device, and projector. According to an embodiment, the display module 1160 may include a touch sensor adapted to detect a touch, or a pressure sensor adapted to measure the intensity of force incurred by the touch.

The audio module 1170 may convert a sound into an electrical signal and vice versa. According to an embodiment, the audio module 1170 may obtain the sound via the input module 1150, or output the sound via the sound output module 1155 or a headphone of an external electronic device (e.g., an electronic device 1102) directly (e.g., wiredly) or wirelessly coupled with the electronic device 1101.

The sensor module 1176 may detect an operational state (e.g., power or temperature) of the electronic device 1101 or an environmental state (e.g., a state of a user) external to the electronic device 1101, and then generate an electrical signal or data value corresponding to the detected state. According to an embodiment, the sensor module 1176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1177 may support one or more specified protocols to be used for the electronic device 1101 to be coupled with the external electronic device (e.g., the electronic device 1102) directly (e.g., wiredly) or wirelessly. According to an embodiment, the interface 1177 may include, for example, a high definition multimedia interface (HDMI), a universal serial bus (USB) interface, a secure digital (SD) card interface, or an audio interface.

A connecting terminal 1178 may include a connector via which the electronic device 1101 may be physically connected with the external electronic device (e.g., the electronic device 1102). According to an embodiment, the connecting terminal 1178 may include, for example, a HDMI connector, a USB connector, a SD card connector, or an audio connector (e.g., a headphone connector).

The haptic module 1179 may convert an electrical signal into a mechanical stimulus (e.g., a vibration or a movement) or electrical stimulus which may be recognized by a user via his tactile sensation or kinesthetic sensation. According to an embodiment, the haptic module 1179 may include, for example, a motor, a piezoelectric element, or an electric stimulator.

The camera module 1180 may capture a still image or moving images. According to an embodiment, the camera module 1180 may include one or more lenses, image sensors, image signal processors, or flashes.

The power management module 1188 may manage power supplied to the electronic device 1101. According to one embodiment, the power management module 1188 may be implemented as at least part of, for example, a power management integrated circuit (PMIC).

The battery 1189 may supply power to at least one component of the electronic device 1101. According to an embodiment, the battery 1189 may include, for example, a primary cell which is not rechargeable, a secondary cell which is rechargeable, or a fuel cell.

The communication module 1190 may support establishing a direct (e.g., wired) communication channel or a wireless communication channel between the electronic device 1101 and the external electronic device (e.g., the electronic device 1102, the electronic device 1104, or the server 1108) and performing communication via the established communication channel. The communication module 1190 may include one or more communication processors that are operable independently from the processor 1120 (e.g., the application processor (AP)) and supports a direct (e.g., wired) communication or a wireless communication. According to an embodiment, the communication module 1190 may include a wireless communication module 1192 (e.g., a cellular communication module, a short-range wireless communication module, or a global navigation satellite system (GNSS) communication module) or a wired communication module 1194 (e.g., a local area network (LAN) communication module or a power line communication (PLC) module). A corresponding one of these communication modules may communicate with the external electronic device via the first network 1198 (e.g., a short-range communication network, such as Bluetooth^{™}, wireless-fidelity (Wi-Fi) direct, or infrared data association (IrDA)) or the second network 1199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1192 may identify and authenticate the electronic device 1101 in a communication network, such as the first network 1198 or the second network 1199, using subscriber information (e.g., international mobile subscriber identity (IMSI)) stored in the subscriber identification module 1196.

The wireless communication module 1192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1192 may support a high-frequency band (e.g., the millimeter wave (mmWave) band) to achieve, e.g., a high data transmission rate. The wireless communication module 1192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1192 may support various requirements specified in the electronic device 1101, an external electronic device (e.g., the electronic device 1104), or a network system (e.g., the second network 1199). According to an embodiment, the wireless communication module 1192 may support a peak data rate (e.g., 20Gbps or more) for implementing eMBB, loss coverage (e.g., 1164dB or less) for implementing mMTC, or user plane (U-plane) latency (e.g., 0.5ms or less for each of downlink (DL) and uplink (UL), or a round trip of 11ms or less) for implementing URLLC.

The antenna module 1197 may transmit or receive a signal or power to or from the outside (e.g., the external electronic device) of the electronic device 1101. According to an embodiment, the antenna module 1197 may include an antenna including a radiating element composed of a conductive material or a conductive pattern formed in or on a substrate (e.g., a printed circuit board (PCB)). According to an embodiment, the antenna module 1197 may include a plurality of antennas (e.g., array antennas). In such a case, at least one antenna appropriate for a communication scheme used in the communication network, such as the first network 1198 or the second network 1199, may be selected, for example, by the communication module 1190 (e.g., the wireless communication module 1192) from the plurality of antennas. The signal or the power may then be transmitted or received between the communication module 1190 and the external electronic device via the selected at least one antenna. According to an embodiment, another component (e.g., a radio frequency integrated circuit (RFIC)) other than the radiating element may be additionally formed as part of the antenna module 1197.

According to various embodiments, the antenna module 1197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1101 and the external electronic device 1104 via the server 1108 coupled with the second network 1199. Each of the electronic devices 1102 or 1104 may be a device of a same type as, or a different type, from the electronic device 1101. According to an embodiment, all or some of operations to be executed at the electronic device 1101 may be executed at one or more of the external electronic devices 1102, 1104, or 1108. For example, if the electronic device 1101 should perform a function or a service automatically, or in response to a request from a user or another device, the electronic device 1101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1101. The electronic device 1101 may provide the outcome, with or without further processing of the outcome, as at least part of a reply to the request. To that end, a cloud computing, distributed computing, mobile edge computing (MEC), or client-server computing technology may be used, for example. The electronic device 1101 may provide ultra low-latency services using, e.g., distributed computing or mobile edge computing. In another embodiment, the external electronic device 1104 may include an internet-of-things (IoT) device. The server 1108 may be an intelligent server using machine learning and/or a neural network. According to an embodiment, the external electronic device 1104 or the server 1108 may be included in the second network 1199. The electronic device 1101 may be applied to intelligent services (e.g., smart home, smart city, smart car, or healthcare) based on 5G communication technology or IoT-related technology.

FIG. 12 is a block diagram illustrating an integrated intelligence system according to an embodiment.

Referring to FIG. 12, the integrated intelligence system according to an embodiment may include a user terminal 1201, an intelligent server 1300, and a service server 1400.

The user terminal 1201 according to an embodiment (e.g., the electronic device 1101 of FIG. 11) may be a terminal device (or an electronic device) connectable to the Internet and may be, for example, a mobile phone, a smartphone, a personal digital assistant (PDA), a notebook computer, a television (TV), a white home appliance, a wearable device, a head mounted device (HMD), or a smart speaker.

According to the illustrated embodiment, the user terminal 1201 may include a communication interface 1290, a microphone 1270, a speaker 1255, a display 1260, a memory 1230, and/or a processor 1220. The above-listed components may be operatively or electrically connected to each other.

The communication interface 1290 (e.g., the communication module 1190 of FIG. 11) may be configured to be connected to an external device to transmit and receive data. The microphone 1270 (e.g., the audio module 1170 of FIG. 11) may receive a sound (e.g., a user utterance) and convert the sound into an electrical signal. The speaker 1255 (e.g., the audio output module 1155 of FIG. 11) may output an electrical signal as a sound (e.g., a voice). The display 1260 (e.g., the display module 1160 of FIG. 11) may be configured to display an image or a video. The display 1260 according to an embodiment may also display a graphic user interface (GUI) of an app (or an application program) being executed.

The memory 1230 according to an embodiment (e.g., the memory 1130 of FIG. 11) may store a client module 1231, a software development kit (SDK) 1233, and a plurality of applications. The client module 1231 and the SDK 1233 may configure a framework (or a solution program) for performing general-purpose functions. Further, the client module 1231 or the SDK 1233 may configure a framework for processing a voice input.

The plurality of applications (e.g., 1255a, 1255b) may be programs for performing designated functions. According to an embodiment, the plurality of applications may include a first app 1235a and/or a second app 1235b. According to an embodiment, each of the plurality of applications may include a plurality of operations for performing designated functions. For example, the applications may include an alarm app, a message app, and/or a schedule app. According to an embodiment, the plurality of applications may be executed by the processor 1220 to sequentially execute at least some of the plurality of operations.

The processor 1220 according to an embodiment may control overall operations of the user terminal 1201. For example, the processor 1220 may be electrically connected to the communication interface 1290, the microphone 1270, the speaker 1255, and the display 1260 to perform designated operations. For example, the processor 1220 may include at least one processor.

The processor 1220 according to an embodiment may also execute a program stored in the memory 1230 to perform designated functions. For example, the processor 1220 may execute at least one of the client module 1231 or the SDK 1233 to perform the following operations for processing a voice input. The processor 1220 may control operations of the plurality of applications, for example, through the SDK 1233. The following operations described as operations of the client module 1231 or the SDK 1233 may be operations performed by execution of the processor 1220.

The client module 1231 according to an embodiment may receive a voice input. For example, the client module 1231 may receive a voice signal corresponding to a user utterance detected through the microphone 1270. The client module 1231 may transmit the received voice input (e.g., the voice signal) to the intelligent server 1300. The client module 1231 may transmit state information about the user terminal 1201 together with the received voice input to the intelligent server 1300. The state information may be, for example, execution state information about an app.

The client module 1231 according to an embodiment may receive a result corresponding to the received voice input from the intelligent server 1300. For example, when the intelligent server 1300 may generate the result corresponding to the received voice input, the client module 1231 may receive the result corresponding to the received voice input. The client module 1231 may display the received result on the display 1260.

The client module 1231 according to an embodiment may receive a plan corresponding to the received voice input. The client module 1231 may display, on the display 1260, a result of executing a plurality of actions of an app according to the plan. The client module 1231 may sequentially display, for example, execution results of the plurality of actions on the display. The user terminal 1201 may display, for another example, only some results (e.g., a result of a last action) among the execution results of the plurality of actions on the display.

The client module 1231 according to an embodiment may receive, from the intelligent server 1300, a request for obtaining information required to generate a result corresponding to the voice input. According to an embodiment, the client module 1231 may transmit the required information to the intelligent server 1300 in response to the request.

The client module 1231 according to an embodiment may transmit, to the intelligent server 1300, result information obtained by executing a plurality of actions according to the plan. The intelligent server 1300 may confirm that the received voice input has been correctly processed using the result information.

The client module 1231 according to an embodiment may include a speech recognition module. According to an embodiment, the client module 1231 may recognize a voice input for performing a limited function through the speech recognition module. For example, the client module 1231 may execute an intelligent app for processing a designated voice input (e.g., wake up!) by performing an organic operation in response to the voice input.

The intelligent server 1300 according to an embodiment may receive information related to a user voice input from the user terminal 1201 through a network 1299 (e.g., the first network 1198 and/or the second network 1199 of FIG. 11). According to an embodiment, the intelligent server 1300 may convert data related to the received voice input into text data. According to an embodiment, the intelligent server 1300 may generate at least one plan for performing a task corresponding to the user voice input based on the text data.

According to an embodiment, the plan may be generated by an artificial intelligence (AI) system. The artificial intelligence system may be a rule-based system or may be a neural network-based system (e.g., a feedforward neural network (FNN) and/or a recurrent neural network (RNN)). Alternatively, the artificial intelligence system may be a combination thereof or another artificial intelligence system. According to an embodiment, the plan may be selected from a set of predefined plans or generated in real time in response to a user request. For example, the artificial intelligence system may select at least one plan from among a plurality of predefined plans.

The intelligent server 1300 according to an embodiment may transmit a result based on the generated plan to the user terminal 1201 or transmit the generated plan to the user terminal 1201. According to an embodiment, the user terminal 1201 may display the result based on the plan on the display. According to an embodiment, the user terminal 1201 may display, on the display, a result of executing an action according to the plan.

The intelligent server 1300 according to an embodiment may include a front end 1310, a natural language platform 1320, a capsule database 1330, an execution engine 1340, an end user interface 1350, a management platform 1360, a big data platform 1370, or an analytic platform 1380.

The front end 1310 according to an embodiment may receive the voice input received by the user terminal 1201 from the user terminal 1201. The front end 1310 may transmit a response corresponding to the voice input to the user terminal 1201.

According to an embodiment, the natural language platform 1320 may include an automatic speech recognition module (ASR module) 1321, a natural language understanding module (NLU module) 1323, a planner module 1325, a natural language generator module (NLG module) 1327, and/or a text to speech module (TTS module) 1329.

The automatic speech recognition module 1321 according to an embodiment may convert the voice input received from the user terminal 1201 into text data. The natural language understanding module 1323 according to an embodiment may identify an intent of the user using text data of the voice input. For example, the natural language understanding module 1323 may identify the intent of the user by performing syntactic analyze and/or semantic analyze. The natural language understanding module 1323 according to an embodiment may identify meanings of words extracted from the voice input using linguistic features (e.g., grammatical elements) of morphemes or phrases, and determine the intent of the user by matching the identified meanings of the words with the intent.

The planner module 1325 according to an embodiment may generate a plan using the intent and parameters determined by the natural language understanding module 1323. According to an embodiment, the planner module 1325 may determine a plurality of domains required to perform a task based on the determined intent. The planner module 1325 may determine a plurality of actions included in each of the plurality of domains determined based on the intent. According to an embodiment, the planner module 1325 may determine parameters required to execute the plurality of actions or result values output by execution of the plurality of actions. The parameters and the result values may be defined as concepts in a specified format (or class). Accordingly, the plan may include the plurality of actions and/or the plurality of concepts determined by the intent of the user. The planner module 1325 may determine relationships between the plurality of actions and the plurality of concepts in a stepwise (or hierarchical) manner. For example, the planner module 1325 may determine an execution order of the plurality of actions determined based on the intent of the user based on the plurality of concepts. In other words, the planner module 1325 may determine the execution order of the plurality of actions based on parameters required for execution of the plurality of actions and results output by execution of the plurality of actions. Accordingly, the planner module 1325 may generate the plan including association information (e.g., ontology) between the plurality of actions and the plurality of concepts. The planner module 1325 may generate the plan using information stored in the capsule database 1330 in which a set of relationships between concepts and actions is stored.

The natural language generator module 1327 according to an embodiment may convert specified information into a text form. The information converted into the text form may be in a form of a natural language utterance. The text to speech module 1329 according to an embodiment may convert the information in the text form into information in a voice form.

According to an embodiment, some or all functions of the natural language platform 1320 may be implemented in the user terminal 1201. For example, the user terminal 1201 may include an automatic speech recognition module and/or a natural language understanding module. After recognizing a user voice command, the user terminal 1201 may transmit text information corresponding to the recognized voice command to the intelligent server 1300. For example, the user terminal 1201 may include a text to speech module. The user terminal 1201 may receive text information from the intelligent server 1300 and output the received text information as voice.

The capsule database 1330 may store information on the relationships between the plurality of concepts and actions corresponding to the plurality of domains. A capsule according to an embodiment may include a plurality of action objects (or action information) and/or concept objects (or concept information) included in the plan. According to an embodiment, the capsule database 1330 may store a plurality of capsules in a form of a concept action network (CAN). According to an embodiment, the plurality of capsules may be stored in a function registry included in the capsule database 1330.

The capsule database 1330 may include a strategy registry in which strategy information required to determine a plan corresponding to a voice input is stored. The strategy information may include reference information for determining one plan when there are a plurality of plans corresponding to the voice input. According to an embodiment, the capsule database 1330 may include a follow up registry in which information on follow-up actions for suggesting a subsequent action to the user in a specified situation is stored. The follow-up action may include, for example, a follow-up utterance. According to an embodiment, the capsule database 1330 may include a layout registry in which layout information about information output through the user terminal 1201 is stored. According to an embodiment, the capsule database 1330 may include a vocabulary registry in which vocabulary information included in capsule information is stored. According to an embodiment, the capsule database 1330 may include a dialog registry in which dialog (interaction) information with the user is stored. The capsule database 1330 may update objects stored through a developer tool. The developer tool may include, for example, a function editor for updating an action object or a concept object. The developer tool may include a vocabulary editor for updating vocabulary. The developer tool may include a strategy editor for generating and registering a strategy for determining the plan. The developer tool may include a dialog editor for generating a dialog with the user. The developer tool may include a follow up editor capable of editing a follow-up utterance for activating a follow-up goal and providing a hint. The follow-up goal may be determined based on a currently set goal, a preference of the user, or an environmental condition. In an embodiment, the capsule database 1330 may also be implemented in the user terminal 1201.

The execution engine 1340 according to an embodiment may generate a result using the generated plan. The end user interface 1350 may transmit the generated result to the user terminal 1201. Accordingly, the user terminal 1201 may receive the result and provide the received result to the user. The management platform 1360 according to an embodiment may manage information used in the intelligent server 1300. The big data platform 1370 according to an embodiment may collect data of the user. The analytic platform 1380 according to an embodiment may manage quality of service (QoS) of the intelligent server 1300. For example, the analytic platform 1380 may manage components and a processing speed (or efficiency) of the intelligent server 1300.

The service server 1400 according to an embodiment may provide a designated service (e.g., food ordering or hotel reservation) to the user terminal 1201. According to an embodiment, the service server 1400 may be a server operated by a third party. The service server 1400 according to an embodiment may provide information for generating a plan corresponding to the received voice input to the intelligent server 1300. The provided information may be stored in the capsule database 1330. Further, the service server 1400 may provide result information according to the plan to the intelligent server 1300. The service server 1400 may communicate with the intelligent server 1300 and/or the user terminal 1201 through the network 1299. The service server 1400 may communicate with the intelligent server 1300 through a separate connection. Although the service server 1400 is illustrated as a single server in FIG. 12, the embodiments of the present disclosure are not limited thereto. At least one of services 1401, 1402, and 1403 of the service server 1400 may be implemented as a separate server.

In the integrated intelligence system described above, the user terminal 1201 may provide various intelligent services to the user in response to the user input. The user input may include, for example, an input through a physical button, a touch input, or a voice input.

In an embodiment, the user terminal 1201 may provide a voice recognition service through an intelligent app (or a speech recognition app) stored therein. In this case, for example, the user terminal 1201 may recognize a user utterance or a voice input received through the microphone and provide a service corresponding to the recognized voice input to the user.

In an embodiment, the user terminal 1201 may perform a designated operation independently or together with the intelligent server and/or the service server, based on the received voice input. For example, the user terminal 1201 may execute an app corresponding to the received voice input and perform a designated operation through the executed app.

In an embodiment, when the user terminal 1201 provides the service together with the intelligent server 1300 and/or the service server, the user terminal may detect the user utterance using the microphone 1270 and generate a signal (or voice data) corresponding to the detected user utterance. The user terminal may transmit the voice data to the intelligent server 1300 using the communication interface 1290.

The intelligent server 1300 according to an embodiment may generate, as a response to the voice input received from the user terminal 1201, a plan for performing a task corresponding to the voice input or a result obtained by performing an action according to the plan. The plan may include, for example, a plurality of actions for performing the task corresponding to the voice input of the user and/or a plurality of concepts related to the plurality of actions. The concepts may define parameters input to execution of the plurality of actions or result values output by execution of the plurality of actions. The plan may include association information between the plurality of actions and/or the plurality of concepts.

The user terminal 1201 according to an embodiment may receive the response using the communication interface 1290. The user terminal 1201 may output a voice signal generated inside the user terminal 1201 to the outside using the speaker 1255 or output an image generated inside the user terminal 1201 to the outside using the display 1260.

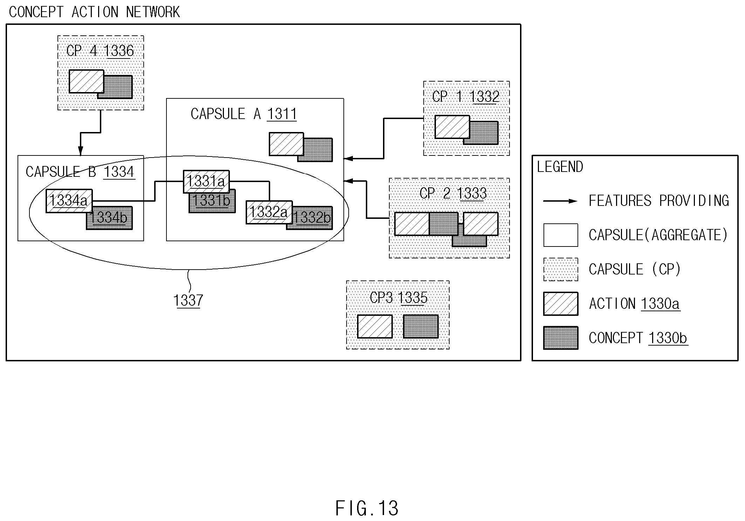

FIG. 13 is a diagram illustrating a form in which relationship information between concepts and actions is stored in a database according to an embodiment.

A capsule database (e.g., the capsule database 1330) of the intelligent server 1300 may store capsules in a concept action network (CAN) form. The capsule database may store actions for processing a task corresponding to a user's voice input, and parameters required for the actions, in the CAN form.

The capsule database may store a plurality of capsules (capsule A 1331 and capsule B 1334) corresponding to respective ones of a plurality of domains (e.g., applications). According to an embodiment, one capsule (e.g., capsule A 1331) may correspond to one domain (e.g., a location (geo) or an application). Further, one capsule may be associated with at least one service provider capsule (e.g., CP 1 1332, CP 2 1333, CP 3 1335, and/or CP 4 1336) for performing a function for the domain related to the capsule. According to an embodiment, one capsule may include at least one action 1330a and at least one concept 1330b for performing a designated function.

The natural language platform 1320 may generate a plan for performing the task corresponding to the received voice input using a capsule stored in the capsule database 1330. For example, the planner module 1325 of the natural language platform may generate a plan using a capsule stored in the capsule database. For example, a plan 1337 may be generated using actions 1331a and 1332a and concepts 1331b and 1332b of capsule A 1331 and an action 1334a and a concept 1334b of capsule B 1334.

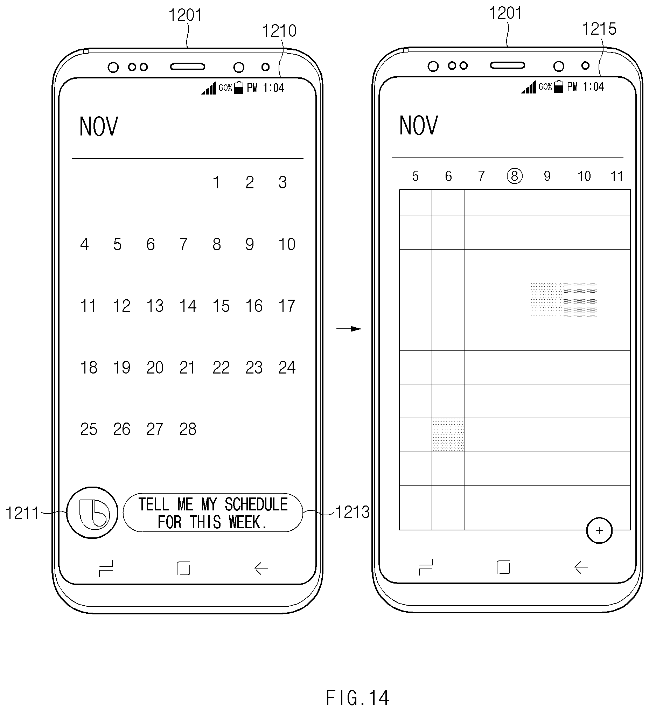

FIG. 14 is a view illustrating a screen in which a user terminal processes a received voice input through an intelligent app according to an embodiment.

The user terminal 1201 may execute an intelligent app in order to process a user input through the intelligent server 1300.

According to an embodiment, on a first screen 1410, when the user terminal 1201 recognizes a designated voice input (e.g., Wake up!) or receives an input through a hardware key (e.g., a dedicated hardware key), the user terminal 1201 may execute an intelligent app for processing the voice input. For example, the user terminal 1201 may execute the intelligent app in a state of executing a schedule app. According to an embodiment, the user terminal 1201 may display an object (e.g., an icon) 1411 corresponding to the intelligent app on the display 1260. According to an embodiment, the user terminal 1201 may receive a voice input by a user utterance. For example, the user terminal 1201 may receive a voice input "Tell me this week's schedule." According to an embodiment, the user terminal 1201 may display, on the display, a user interface (UI) 1213 (e.g., an input window) of the intelligent app in which text data of the received voice input is displayed.

According to an embodiment, on a second screen 1415, the user terminal 1201 may display a result corresponding to the received voice input on the display. For example, the user terminal 1201 may receive a plan corresponding to the received user input and display "this week's schedule" on the display according to the plan.

FIG. 15 illustrates a generative artificial intelligence system according to an embodiment.

Referring to FIG. 15, in a generative artificial intelligence system 1500, a user query/response interface 1510 may receive a user input. The user input may be in a form of natural language, an image, and/or a video. Further, when the user input is transmitted, context information may also be transmitted together. The context information may include various additional pieces of information at a time point of the user input. For example, the context information may include information about an application currently being used by the user or location information about the user. Further, the user input may be in a form in which the above-described natural language, image, sound, and context information are mixed. Further, the user input may also be in a non-natural language form, such as a menu selection.

According to an embodiment, the user query/response interface 1510 may output a result of the generative artificial intelligence system to the user. The output may be in a natural language form or a specific content form and may also be provided in a form such as an action requested by the user or the like. The user query/response interface 1510 may output the result of the generative artificial intelligence system 1500 to the user. The output may be in a natural language form or a specific content form and may also be provided in a form such as an action requested by the user or the like.

According to an embodiment, the artificial intelligence framework 1520 may receive the user input and coordinate and control respective components or modules required to perform an intent of the user based on a user query.

According to an embodiment, the user input received in the user query/response interface 1510 may be transmitted to a prompt design module 1521. The prompt design module 1521 may be used to generate a prompt suitable for inputting the user input to a large language model (LLM) or a large multi-modal model (LMM). The prompt design module 1521 may be an artificial intelligence component using a machine learning algorithm or a neural network to develop better prompts over time. The prompt design module 1521 may access a database 1530 including user preference data, a prompt library, and prompt examples based on the user input to generate a prompt and transmit the generated prompt to the LLM or the LMM.

According to an embodiment, an application programming interface (API)/plugin management module 1522 may serve to communicate with external information when there is a request for additional information when the user input is transmitted as an input of a generative artificial intelligence model 1550. The API/plugin management module 1522 may establish a channel capable of communicating with the outside of an artificial intelligence interface through an API and may enable access to various data sources (e.g., the database 1530) through the established channel. Further, when an action for finally performing the user input is to be performed in an application/service module 1540 rather than an intermediate result, the API/plugin management module 1522 may request the corresponding action from the application/service module 930 through the API. Information obtained from the outside may be used to generate a prompt in the prompt design module 1521 together with the user input or may be transmitted as an input of the generative artificial intelligence model 1550.

According to an embodiment, a refinement module 1523 may finely tune a result output from the generative artificial intelligence model 1550. For example, the refinement module 1523 may verify whether content generated through the LLM and/or the LMM is irrelevant, includes biased content, or includes harmful content. Further, the refinement module 1523 may determine how closely the content matches a result desired by the user and may perform a corresponding process when an additional process is required. The refinement module 1523 may additionally configure a hint for avoiding an unwanted output and provide the hint to the user.

According to an embodiment, the generative artificial intelligence model 1550 may generally refer to an artificial intelligence neural network that generates data in a new form based on user input information. The generative artificial intelligence model 1550 may include a model generating an image and/or a model generating language. Representative examples of the model generating an image include a generative adversarial network (GAN) and a variational auto encoder (VAE), and a diffusion-based generative model using the VAE and a transformer structure may be taken as an example. The model generating language may be a model trained to output a statistically most appropriate output value based on an input value, and models such as CHAT-GPT 3 and CHAT-GPT 4 may be taken as representative examples. Further, there may be a large multi-modal model (LMM) capable of recognizing various forms of data input such as text, an image, speech, and the like and generating new data corresponding thereto.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1140) including one or more instructions that are stored in a storage medium (e.g., internal memory 1136 or external memory 1138) that is readable by a machine (e.g., the electronic device 1101). For example, a processor (e.g., the processor 1120) of the machine (e.g., the electronic device 1101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore ^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a communication circuit;
a memory including instructions and a large language model(LLM) database including a plurality of LLMs; and
at least one processor,
wherein the instructions, when executed by the at least one processor, cause the electronic device to:
receive information corresponding to at least one user utterance from an external electronic device,
identify at least one intent included in the at least one user utterance and a number of intents included in the at least one user utterance,
based at least in part on the at least one intent and the number of intent, determine processing level required to process the at least one user utterance,
select a first LLM having performance corresponding to the determined processing level from among the plurality of LLMs, and
process the at least one user utterance by using the first LLM.

2. The electronic device of claim 1, wherein the instructions, when executed by the at least one processor, cause the electronic device to:
receive context information associated with the external electronic device from the external electronic device, and
determine the processing level based at least in part on the context information.

3. The electronic device of claim 1 or 2, wherein the instructions, when executed by the at least one processor, cause the electronic device to:
obtain input data associated with the at least one user utterance, and
determine the processing level at least in part on a type of the input data, and
wherein the type of input data includes at least one of a text, an image, a video, or a combination thereof.

4. The electronic device of any one of claims 1 to 3, wherein the instructions, when executed by the at least one processor, cause the electronic device to:
using a trained artificial intelligence (AI) model, predict at least one of the number of processing step, processing time, processing speed, computational amount, or a combination thereof required to process the at least one user utterance using at least one LLM among the plurality of LLMs, and
determine the processing level based at least in part on a result of prediction.

5. The electronic device of claim 1, wherein the instructions, when executed by the at least one processor, cause the electronic device to:
store a processing history of the at least one user utterance processed using the first LLM, and
train or update an AI model used to determine the processing level based on the processing history.

6. The electronic device of claim 1, wherein the plurality of LLMs are classified into a plurality of designated categories and stored in the LLM database, and
wherein the instructions, when executed by the at least one processor, cause the electronic device to:
select at least one category from among the plurality of categories based on the at least one intent, and
select the first LLM among LLM belonging to the selected at least one category based on the number of intent.

7. The electronic device of claim 1, wherein the instructions, when executed by the at least one processor, cause the electronic device to:
select the first LLM based on a result of comparing the processing level with a predetermined threshold.

8. The electronic device of claim 1, wherein the instructions, when executed by the at least one processor, cause the electronic device to:
while processing the at least one user utterance using the first LLM, based on identifying that a processing state of the at least one user utterance does not correspond to the determined processing level, select a second LLM corresponding to the processing state among the plurality of LLMs, and
process the at least one user utterance using the second LLM.

9. The electronic device of claim 8, wherein the instructions, when executed by the at least one processor, cause the electronic device to:
generate summary information summarizing a content of processing the at least on user utterance using the first LLM,
provide the summary information to the second LLM, and
using the second LLM, process the at least one user utterance based on the summary information.

10. The electronic device of claim 1, wherein the instructions, when executed by the at least one processor, cause the electronic device to:
receive a user setting value associated with LLM selection criteria from the external electronic device, and
select the first LLM based at least in part on the user setting value.

11. A method for processing an utterance performed by an electronic device, the method comprising:
receiving information corresponding to at least one user utterance from an external electronic device;
identifying at least one intent included in the at least one user utterance and a number of intents included in the at least one user utterance;
determining a processing level required to process the at least one user utterance based at least in part on the at least one intent and the number of intents;
selecting a first large language model (LLM) having performance corresponding to the determined processing level from among a plurality of LLMs included in an LLM database; and
processing the at least one user utterance by using the first LLM.

12. The method of claim 11, wherein the determining of the processing level includes:
receiving context information associated with the external electronic device from the external electronic device; and
determining the processing level based at least in part on the context information.

13. The method of claim 11 or 12, wherein the determining of the processing level includes:
obtaining input data associated with the at least one user utterance; and
determining the processing level based at least in part on a type of the input data, and
the type of input data includes at least one of text, an image, a video, or a combination thereof.

14. The method of any one of claims 11 to 13, wherein the determining of the processing level includes:
predicting at least one of the number of processing steps, a processing time, a processing speed, an amount of computation, or a combination thereof required to process the at least one user utterance using at least one LLM among the plurality of LLMs, using a trained artificial intelligence (AI) model; and
determining the processing level based at least in part on a result of the prediction.

15. The method of claim 11, wherein the plurality of LLMs are classified into a plurality of designated categories and stored in the LLM database, and
wherein the selecting of the first LLM includes:
selecting at least one category from among the plurality of categories based on the at least one intent; and
selecting the first LLM from among LLMs belonging to the selected at least one category based on the number of intents.
